# EUROPEAN PATENT SPECIFICATION

(11) **EP 4 104 517 B1**
(45) Date of publication and mention of the grant of the patent: **07.10.2026**
(21) Application number: 21753349.6
(22) Date of filing: 10.02.2021
(51) Int. Cl.: H04W 12/06, H04W 12/088, H04W 48/02, H04W 48/18, H04W 60/00, H04W 88/18

(54) **METHODS, APPARATUS AND SYSTEMS FOR SLICE-SPECIFIC AUTHENTICATION AND AUTHORIZATION IN NETWORK**
VERFAHREN, GERÄTE UND SYSTEME ZUR SCHEIBENSPEZIFISCHEN AUTHENTIFIZIERUNG UND AUTORISIERUNG IM NETZ
PROCÉDÉS, APPAREIL ET SYSTÈMES PERMETTANT D'EFFECTUER UNE AUTHENTIFICATION ET UNE AUTORISATION SPÉCIFIQUES À UNE TRANCHE DANS UN RÉSEAU

(30) Priority: 12.02.2020 GB 202001940; 12.02.2020 GB 202001942
(43) Date of publication of application: 21.12.2022
(73) Proprietor: Samsung Electronics Co., Ltd., Gyeonggi-do 16677 (KR)
(72) Inventor: WATFA, Mahmoud, Suwon-si, Gyeonggi-do, 16677 (KR); KAURA, Ricky Kumar, Suwon-si, Gyeonggi-do, 16677 (KR)
(74) Representative: Gulde & Partner
(86) International application number: PCT/KR2021/001845
(87) International publication number: WO 2021/162487

(56) References cited:
- WO-A1-2018/008980
- SECRETARY OF SA WG2: "Draft Report of SA WG2 meetings #136", vol. SA WG2, no. Incheon, South Korea; 20200113 - 20200117, 7 January 2020 (2020-01-07), XP051842190, Retrieved from the Internet <URL:https://ftp.3gpp.org/tsg_sa/WG2_Arch/TSGS2_136AH_Incheon/Docs/S2-2000002.zip S2-2000002_S2_136_Draft_Report_v006rm.docx> [retrieved on 20200107]
- QUALCOMM INCORPORATED: "Correction on pending NSSAA indication to UE", 3GPP DRAFT; S2-1911063, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Reno, nevada; 20191118 - 20191122, 8 November 2019 (2019-11-08), Mobile Competence Centre ; 650, route des Lucioles ; F-06921 Sophia-Antipolis Cedex ; France, XP051821173
- "3rd Generation Partnership Project; Technical Specification Group Core Network and Terminals; Non-Access-Stratum (NAS) protocol for 5G System (5GS); Stage 3 (Release 16)", 3GPP STANDARD; TECHNICAL SPECIFICATION; 3GPP TS 24.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V16.3.0, 20 December 2019 (2019-12-20), Mobile Competence Centre ; 650, route des Lucioles ; F-06921 Sophia-Antipolis Cedex ; France, pages 1 - 645, XP051840838
- ANONYMOUS: "3rd Generation Partnership Project; Technical Specification Group Services and System Aspects; System architecture for the 5G System (5GS); Stage 2 (Release 16)", 3GPP STANDARD; TECHNICAL SPECIFICATION; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.3.0, 22 December 2019 (2019-12-22), Mobile Competence Centre ; 650, route des Lucioles ; F-06921 Sophia-Antipolis Cedex ; France, pages 1 - 417, XP051840930
- NEC: "Preventing UE waiting for completion of NSSAA indefinitely", 3GPP DRAFT; C1-196441_DISC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. Portoroz ,Slovenia ; 20191007 - 20191011, 30 September 2019 (2019-09-30), Mobile Competence Centre ; 650, route des Lucioles ; F-06921 Sophia-Antipolis Cedex ; France, pages 1 - 3, XP051788050

## Description

### [Technical Field]

Certain examples of the disclosure provide methods, apparatus and systems for performing slice-specific authentication and authorization in a network. For example, certain examples of the disclosure provide methods, apparatus and systems for performing enhanced network slice-specific authentication and authorization (e.g. on default slices) in 3GPP 5G.

### [Background Art]

To meet the demand for wireless data traffic having increased since deployment of 4th generation (4G) communication systems, efforts have been made to develop an improved 5th generation (5G) or pre-5G communication system. The 5G or pre-5G communication system is also called a 'beyond 4G network' or a 'post long term evolution (LTE) system'. The 5G communication system is considered to be implemented in higher frequency (mmWave) bands, e.g., 60 GHz bands, so as to accomplish higher data rates. To decrease propagation loss of the radio waves and increase the transmission distance, beamforming, massive multiple-input multiple-output (MIMO), full dimensional MIMO (FD-MIMO), array antenna, analog beamforming, and large scale antenna techniques are discussed with respect to 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like. In the 5G system, hybrid frequency shift keying (FSK) and Feher's quadrature amplitude modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, MTC, and M2M communication may be implemented by beamforming, MIMO, and array antennas. Application of a cloud RAN as the above-described big data processing technology may also be considered to be as an example of convergence between the 5G technology and the IoT technology.

As described above, various services can be provided according to the development of a wireless communication system, and thus a method for easily providing such services is required.

3GPP TS 24.501 V16.3.0 is concerned, inter alia, with NAS transport procedure(s) and in particular with UE-initiated NAS transport of messages not accepted by the network.

### [Disclosure]

### [Technical Solution]

The invention is defined by the appended claims. The description that follows is subjected to this limitation. Any disclosure lying outside the scope of said claims is only intended for illustrative as well as comparative purposes. In accordance with an aspect of the disclosure, a method, for a UE, for performing a Network Slice-Specific Authentication and Authorization (NSSAA) procedure in a network comprising the UE and a first network entity comprises: in response to transmitting, to the first network entity, a first message for initiating a first procedure, receiving, from the first network entity, a second message; determining whether a first condition is satisfied, the first condition comprising: the second message includes a predefined indication; and determining whether to block or restrict one or more second procedures based on the first condition.

### [Description of Drawings]

Figure 1a illustrates an overview of NSSAA on default slices;
Figure 1b illustrates an overview of PDU Session Establishment;
Figure 1c illustrates an overview of NSSAA;
Figure 2 illustrates a lack of a method to block requests for a UE in connected mode when a trigger for NSSAA occurs for all slices;
Figure 3 illustrates an exemplary 5GS registration result information element with a proposed new indication (bit 7);
Figure 4 illustrates Blocking Services at the UE during NSSAA with no Allowed NSSAI;
Figure 5 illustrates Resuming Services for a UE after NSSAA;
Figure 6 illustrates AMF handling collisions between NSSAA and SMF initiated procedures;
Figure 7 illustrates AMF handling collisions between NSSAA and UE initiated 5GSM procedures;
Figure 8 illustrates AMF handling of new requested NSSAI during an ongoing/pending NSSAA procedure;
Figure 9 illustrates an updated 5GS registration result IE with a proposed new indication;
Figure 10 illustrates an enhanced procedure for NSSAA on default S-NSSAIs;
Figure 11 illustrates performance of NSSAA on default S-NSSAIs at the time of PDU Session Establishment; and
Figure 12 is a block diagram of an exemplary network entity that may be used in certain examples of the disclosure.

### [Mode for Invention]

The following description with reference to accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

While describing the embodiments, technical content that is well known in the related fields and not directly related to the disclosure will not be provided. By omitting redundant descriptions, the essence of the disclosure will not be obscured and may be clearly explained.

For the same reasons, components may be exaggerated, omitted, or schematically illustrated in drawings for clarity. Also, the size of each component does not completely reflect the actual size. In the drawings, like reference numerals denote like elements.

As used herein, the term "and/or" includes any and all combinations of one or more of the associated listed items. Expressions such as "at least one of," when preceding a list of elements, modify the entire list of elements and do not modify the individual elements of the list. Throughout the disclosure, the expression "at least one of a, b or c" indicates only a, only b, only c, both a and b, both a and c, both b and c, all of a, b, and c, or variations thereof.

Advantages and features of one or more embodiments of the disclosure and methods of accomplishing the same may be understood more readily by reference to the following detailed description of the embodiments and the accompanying drawings. In this regard, the embodiments may have different forms and should not be construed as being limited to the descriptions set forth herein. Rather, these embodiments are provided so that this disclosure will be thorough and complete and will fully convey the concept of the embodiments to one of ordinary skill in the art, and the disclosure will only be defined by the appended claims.

Here, it will be understood that combinations of blocks in flowcharts or process flow diagrams may be performed by computer program instructions. Since these computer program instructions may be loaded into a processor of a general purpose computer, a special purpose computer, or another programmable data processing apparatus, the instructions, which are performed by a processor of a computer or another programmable data processing apparatus, create units for performing functions described in the flowchart block(s). The computer program instructions may be stored in a computer-usable or computer-readable memory capable of directing a computer or another programmable data processing apparatus to implement a function in a particular manner, and thus the instructions stored in the computer-usable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks illustrated consecutively may actually be executed substantially concurrently, or the blocks may sometimes be performed in a reverse order according to the corresponding function.

Here, the term "unit" in the embodiments of the disclosure means a software component or hardware component such as a field-programmable gate array (FPGA) or an application-specific integrated circuit (ASIC) and performs a specific function. However, the term "unit" is not limited to software or hardware. The "unit" may be formed so as to be in an addressable storage medium, or may be formed so as to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" may be associated with a smaller number of components and "units", or may be divided into additional components and "units". Furthermore, the components and "units" may be embodied to reproduce one or more central processing units (CPUs) in a device or security multimedia card. Also, in the embodiments, the "unit" may include at least one processor. In the disclosure, a controller may also be referred to as a processor.

A wireless communication system has evolved from providing initial voice-oriented services to, for example, a broadband wireless communication system providing a high-speed and high-quality packet data service, such as communication standards of high speed packet access (HSPA), long-term evolution (LTE) or evolved universal terrestrial radio access (E-UTRA), and LTE-Advanced (LTE-A) of 3rd Generation Partnership Project (3GPP), high rate packet data (HRPD) and ultra mobile broadband (UMB) of 3GPP2, and IEEE 802.16e. A 5th generation (5G) or new radio (NR) communication standards are being developed with 5G wireless communication systems.

Hereinafter, one or more embodiments will be described with reference to accompanying drawings. Also, in the description of the disclosure, certain detailed explanations of related functions or configurations are omitted when it is deemed that they may unnecessarily obscure the essence of the disclosure. All terms including descriptive or technical terms which are used herein should be construed as having meanings that are obvious to one of ordinary skill in the art. However, the terms may have different meanings according to an intention of one of ordinary skill in the art, precedent cases, or the appearance of new technologies, and thus, the terms used herein have to be defined based on the meaning of the terms together with the description throughout the specification. Hereinafter, a base station may be a subject performing resource assignment of a terminal, and may be at least one of a gNode B, an eNode B, a Node B, a base station (BS), a wireless access unit, a base station controller, and a node on a network. A terminal may include user equipment (UE), a mobile station (MS), a cellular phone, a smart phone, a computer, or a multimedia system capable of performing communication functions, or the like. In the disclosure, a downlink (DL) is a wireless transmission path of a signal transmitted from a base station to a terminal, and an uplink (UL) is a wireless transmission path of a signal transmitted from a terminal to a base station. Throughout the specification, a layer (or a layer apparatus) may also be referred to as an entity. Also, hereinbelow, one or more embodiments of the disclosure will be described as an example of an LTE or LTE-A system, but the one or more embodiments may also be applied to other communication systems having a similar technical background or channel form. For example, 5G mobile communication technology (5G, new radio, NR) developed after LTE-A may be included. In addition, the one or more embodiments may be applied to other communication systems through some modifications within the scope of the disclosure without departing from the scope of the disclosure according to a person skilled in the art.

In an LTE system as a representative example of the broadband wireless communication system, an orthogonal frequency division multiplexing (OFDM) scheme is used in a DL and a single carrier frequency division multiplexing (SC-FDMA) scheme is used in a UL. The UL refers to a wireless link through which a terminal, UE, or a MS transmits data or control signals to a BS or a gNode B, and the DL refers to a wireless link through which a BS transmits data or control signals to a terminal. In such a multiple access scheme, data or control information of each user is classified by generally assigning and operating the data or control information such that time-frequency resources for transmitting data or control information for each user do not overlap each other, that is, such that orthogonality is established.

Terms such as a physical channel and a signal in an existing LTE or LTE-A system may be used to describe methods and apparatuses suggested in the disclosure. However, the content of the disclosure is applied to a wireless communication system, instead of the LTE or LTE-A system.

Herein, the following documents are referenced:
[1] 3GPP TS 23.501 V16.3.0
[2] 3GPP TS 23.502 V16.3.0
[3] 3GPP TS 24.501 V16.3.0
[4] 3GPP TS 23.503 V16.3.0

In 3GPP 5GS, the following are defined (e.g. in [1]). A Network Slice (NS) is defined as a logical network that provides specific network capabilities and network characteristics. A Network Slice Instance (NSI) is defined as a set of Network Function instances and the required resources (e.g. compute, storage and networking resources) which form a deployed NS. A Network Function (NF) is defined as a 3GPP adopted or 3GPP defined processing function in a network, which has defined functional behaviour and 3GPP defined interfaces.

A NS may be identified by Single Network Slice Selection Assistance Information (S-NSSAI).

### Overview of Network slice-specific authentication and authorization (NSSAA)

NSSAA was introduced as part of Rel-16 in 3GPP. The feature enables the network to perform slice-specific authentication and authorization for a set of S-NSSAI(s) to ensure that the user is allowed to access these slices. The procedure is executed after the 5G Mobility Management (5GMM) authentication procedure has been completed and also after the registration procedure completes. The high-level description of the feature can be found in [1] whereas further details can be found in [2] and [3]. The key points about the NSSAA procedure are summarized in this section.

The NSSAA procedure is access independent i.e. if a slice is successfully authorized, then it is considered as authorized for both access types (i.e. 3GPP and non-3GPP access type).

Note: "authorized" means that slice-specific authentication/authorization has succeeded for a particular S-NSSAI, however this does not mean that the S-NSSAI is allowed to be used in the UE's current tracking area (TA) over the 3GPP access.

The user has a subscription in the UDM containing a set of subscribed S-NSSAIs where each S-NSSAI may contain an indication whether S-NSSAI is marked as default Subscribed S-NSSAI; and an indication whether the S-NSSAI is subject to NSSAA. When the UE registers with the network, the UE may include a requested NSSAI (R-NSSAI) in the Registration Request message if available at the UE. Each default subscribed S-NSSAI is used to give access to the network when the user did not include a Requested NSSAI in the Registration Request or when the S-NSSAIs that were included in the Requested NSSAI are not in the subscribed S-NSSAIs. However, although [1] indicates that it is recommended that at least one of the Subscribed S-NSSAIs marked as default S-NSSAI is not subject to NSSAA, in order to ensure access to services even when NSSAA fails, this is purely a recommendation, and the operator may wish for all the default S-NSSAIs to be subject to NSSAA.

When the UE registers with the network, the UE may include a requested NSSAI (R-NSSAI) in the Registration Request message if available at the UE. The following text describes the network behaviour as specified in [3], for example for NSSAA with the cases where default subscribed S-NSSAIs are considered in the NSSAA process underlined. In particular, when there is no R-NSSAI or the R-NSSAI contains S-NSSAIs but none of these S-NSSAIs are in the user's subscribed NSSAIs, and all the default S-NSSAIs require NSSAA, then the network informs the UE that NSSAA is pending on these default S-NSSAIs.
*"If the UE indicated the support for network slice-specific authentication and authorization, and:*
   *a) if the Requested NSSAI Information Element (IE) only includes the S-NSSAIs:*
      *1) which are subject to network slice-specific authentication and authorization; and*
      *2) for which the network slice-specific authentication and authorization procedure has not been initiated;*
      *the AMF shall in the REGISTRATION ACCEPT message include:*
      *1) the "NSSAA to be performed" indicator in the 5G System (5GS) registration result IE set to indicate whether network slice-specific authentication and authorization procedure will be performed by the network;*
      *2) pending NSSAI containing one or more S-NSSAIs for which network slice-specific authentication and authorization will be performed; and*
      *3) the current registration area in the list of "non-allowed tracking areas" in the Service area list IE; or*
   *b) if the Requested NSSAI IE includes one or more S-NSSAIs subject to network slice-specific authentication and authorization, the AMF shall in the REGISTRATION ACCEPT message include:*
      *1) the allowed NSSAI containing the S-NSSAIs or the mapped S-NSSAIs which are not subject to network slice-specific authentication and authorization or for which the network slice-specific authentication and authorization has been successfully performed; and*
      *2) pending NSSAI containing one or more S-NSSAIs for which network slice-specific authentication and authorization will be performed, if any.*
*If the UE indicated the support for network slice-specific authentication and authorization, and if:*
   *a) the UE did not include the requested NSSAI in the REGISTRATION REQUEST message or none of the S-NSSAIs in the requested NSSAI in the REGISTRATION REQUEST message are present in the subscribed S-NSSAIs; and*
   *b) all of the S-NSSAIs in the subscribed S-NSSAIs are subject to network slice-specific authentication and authorization;*
   *the AMF shall in the REGISTRATION ACCEPT message include:*
   *a) the "NSSAA to be performed" indicator in the 5GS registration result IE to indicate whether network slice-specific authentication and authorization procedure will be performed by the network;*
   *b) pending NSSAI containing one or more S-NSSAIs for which network slice-specific authentication and authorization will be performed; and*
   *c) the current registration area in the list of "non-allowed tracking areas" in the Service area list IE. "*

NSSAA can be re-initiated at any time by the network as specified in section 5.15.10 of [1]:
*"This procedure can be invoked for a supporting UE by an AMF at any time, e.g. when:*
*a. The UE registers with the AMF and one of the S-NSSAIs of the HPLMN which maps to an S-NSSAI in the Requested NSSAI is requiring Network Slice-Specific Authentication and Authorization (see clause 5.15.5.2.1 for details), and can be added to the Allowed NSSAI by the AMF once the Network Slice-Specific Authentication and Authorization for the S-NSSAI succeeds; or*
*b. The Network Slice-Specific Authentication, Authorization and Accounting (AAA)Server triggers a UE re-authentication and re-authorization for an S-NSSAI; or*
*c*. *The AMF, based on operator policy or a subscription change, decides to initiate the Network Slice-Specific Authentication and Authorization procedure for a certain S-NSSAI which was previously authorized.*
   *In the case of re-authentication and re-authorization (b. and c. above) the following applies:*
   - *If S-NSSAIs that are requiring Network Slice-Specific Authentication and Authorization are included in the Allowed NSSAI for each Access Type, AMF selects an Access Type to be used to perform the Network Slice Specific Authentication and Authorization procedure based on network policies.*
   - *If the Network Slice-Specific Authentication and Authorization for some S-NSSAIs in the Allowed NSSAI is unsuccessful, the AMF shall update the Allowed NSSAI for each Access Type to the UE via UE Configuration Update procedure.*
   - *If the Network Slice-Specific Authentication and Authorization fails for all S-NSSAIs in the Allowed NSSAI, the AMF shall execute the Network-initiated Deregistration procedure described in TS 23.502 [3], clause 4.2.2.3.3, and shall include in the explicit De-Registration Request message the list of Rejected S-NSSAIs, each of them with the appropriate rejection cause value. "*

If all the default S-NSSAIs are subject to NSSAA and the NSSAA procedures do not complete successfully, then the network will start the deregistration procedure. This is stated in [3] subclause 4.6.2.4 as:
*The network slice-specific authentication and authorization procedure can be invoked or revoked by an AMF for a UE supporting network slice-specific authentication and authorization at any time. After the network performs the network slice-specific re-authentication and re-authorization procedure:*
   *a) if network slice-specific authentication and authorization for some but not all S-NSSAIs in the allowed NSSAI fails; the AMF updates the allowed NSSAI and the rejected NSSAI accordingly using the generic UE configuration update procedure as specified in the subclause 5.4.4; or*
   *b) if network slice-specific authentication and authorization fails for all S-NSSAIs in the allowed NSSAI and the pending NSSAI, then AMF performs the network-initiated de-registration procedure and includes the rejected NSSAI in the DEREGISTRATION REQUEST message as specified in the subclause 5.5.2.3 except when the UE has a Protocol Data Unit (PDU) session for emergency services or the UE is establishing a PDU session for emergency services. In this case the AMF shall send CONFIGURATION UPDATE COMMAND containing rejected NSSAI. After the PDU session for the emergency service is released, the AMF performs the network-initiated de-registration procedure as specified in the subclause 5.5.2.3.*
and in [3] in subclause 5.5.2.3.1 as:
   *If the network de-registration is triggered due to network slice-specific authentication and authorization failure or revocation as specified in subclause 4.6.2.4, then the network shall set the 5GMM cause value to #62 "No network slices available" in the DEREGISTRATION REQUEST message. In addition, the AMF may include the rejected NSSAI IE in the DEREGISTRATION REQ UEST message.*

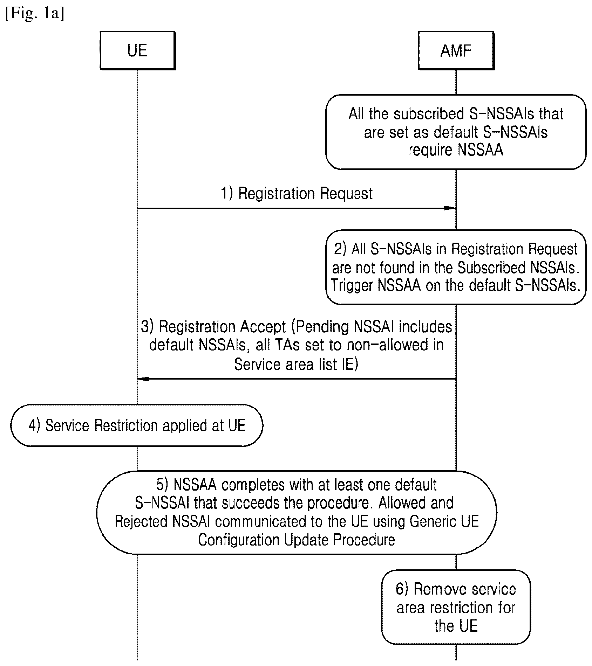

Figure 1a shows the scenario where at least one NSSAA procedure succeeds on a default S-NSSAI.

The total number of S-NSSAI(s) in the:
Allowed NSSAI (A-NSSAI), R-NSSAI, and Pending NSSAI (P-NSSAI) cannot exceed 8.
Configured NSSAI (C-NSSAI) cannot exceed 16.

### PDU Session Establishment

Due to the separation of mobility management functionality and session management functionality into separate components in the 5G architecture (AMF for mobility management and SMF for session management), when the UE establishes a PDU session, the UE encapsulates the 5G Session Management (5GSM) message (PDU SESSION ESTABLISHMENT REQUEST) into a 5GMM message (the 5GMM UL NAS TRANSPORT message). When the user wants to run an application, the UE Route Selection Policies (URSP) rules on the UE (as specified in [4]) will resolve the application to an appropriate Data Network Name (DNN) and slice that suits the application. The DNN and S-NSSAI information is then included in the UL NAS (Non Access Stratum) TRANSPORT message that allows the AMF to make the appropriate decision on which SMF to choose. The interface between the AMF and SMF is a service-based interface and the parameters are included in an appropriate service-based method which is used to invoke the SMF over the N11 interface. In some cases, the URSP rules may not be able to resolve the application to an appropriate DNN and/or S-NSSAI and therefore the UE will not select a DNN and/or an S-NSSAI for PDU session establishment. In these cases, the AMF uses rules to determine how best to select an SMF. Specifically in terms of the S-NSSAI, the AMF will attempt to use the default subscribed S-NSSAIs to form a decision as specified in [3]:
*If the S-NSSAI IE is not included and the user's subscription context obtained from UDM:*
- *contains one default S-NSSAI, the AMF shall use the default S-NSSAI as the S-NSSAI;*
- *contains two or more default S-NSSAIs, the AMF shall use one of the default S-NSSAIs selected by operator policy as the S-NSSAI; and*
- *does not contain a default S-NSSAI, the AMF shall use an S-NSSAI selected based on operator policy as the S-NSSAI.*

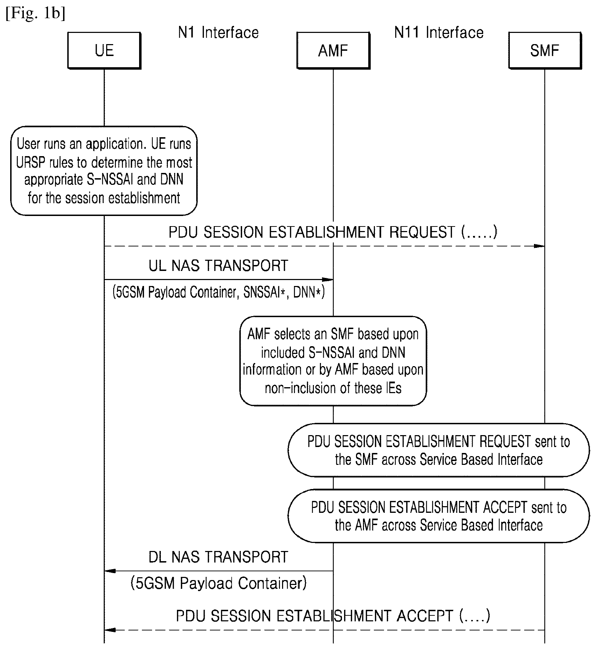

Figure 1b illustrates an overview of PDU Session Establishment.

### Service area restriction

*The concept of service area restriction was introduced as part of the* 5G system in Rel-15 and it applies to the 3GPP system (later in Rel-16 also applicable to wireline access). Service area restriction is enforced by defining some tracking areas (TAs) as either allowed or non-allowed and are sent to the UE in the Service area list IE. Below is an excerpt from [3] on service area restrictions and how they lead to different UE behaviour depending on whether the TAs are set to allowed or non-allowed in the IE:
*"If the UE is successfully registered to a Public Land Mobile Network (PLMN) and has a stored list of "allowed tracking areas":*
   *a) while camped on a cell whose TAI is in the list of "allowed tracking areas", the UE shall stay or enter the state 5GMM-REGISTERED.NORMAL-SERVICE and is allowed to initiate any 5GMM and 5GSM procedures; and*
   *b) while camped on a cell which is in the registered PLMN or a PLMN from the list of equivalent PLMNs and whose TAI is in the registration area and is not in the list of "allowed tracking areas", the UE shall enter the state 5GMM-REGISTERED.NON-ALLOWED-SERVICE, and:*
      *1) if the UE is in 5GMM-IDLE mode over 3GPP access, the UE:*
         *i) shall not perform the registration procedure for mobility and periodic registration update with Uplink data status IE except for emergency services or for high priority access; and*
         *ii) shall not initiate a service request procedure except for emergency services, high priority access, responding to paging or notification or indicating a change of 3GPP Packet Switched (PS) data off UE status; and*
      *2) if the UE is in 5GMM-CONNECTED mode or 5GMM-CONNECTED mode with Radio Resource Control (RRC) inactive indication over 3GPP access, the UE:*
         *i) shall not perform the registration procedure for mobility and periodic registration update with Uplink data status IE except for emergency services or for high priority access; and*
         *ii) shall not initiate a service request procedure except for emergency services, high priority access or for responding to paging or notification over non-3GPP access; and*
         *iii) shall not initiate a 5GSM procedure except for emergency services, high priority access or indicating a change of 3GPP PS data off UE status.*
*If the UE is successfully registered to a PLMN and has a stored list of "non-allowed tracking areas":*
   *a) while camped on a cell which is in the registered PLMN or a PLMN from the list of equivalent PLMNs and whose TAI is not in the list of "non-allowed tracking areas ", the UE shall stay or enter the state 5GMM-REGISTERED.NORMAL-SERVICE and is allowed to initiate any 5GMM and 5GSM procedures; and*
   *b) while camped on a cell whose TAI is in the list of "non-allowed tracking areas", the UE shall enter the state 5GMM-REGISTERED.NON-ALLOWED-SERVICE, and:*
      *1) if the UE is in 5GMM-IDLE mode over 3GPP access, the UE:*
         *i) shall not perform the registration procedure for mobility and periodic registration update with Uplink data status IE except for emergency services or for high priority access; and*
         *ii) shall not initiate a service request procedure except for emergency services, high priority access, responding to paging or notification or indicating a change of 3GPP PS data off UE status; and*
      *2) if the UE is in 5GMM-CONNECTED mode or 5GMM-CONNECTED mode with RRC inactive indication over 3GPP access, the UE:*
         *i) shall not perform the registration procedure for mobility and registration update with the Uplink data status IE except for emergency services or for high priority access; and*
         *ii) shall not initiate a service request procedure except for emergency services, high priority access or for responding to paging or notification over non-3GPP access; and*
         *iii) shall not initiate a 5GSM procedure except for emergency services, high priority access or indicating a change of 3GPP PS data off UE status. "*

For example, when the UE in camped on a cell whose TA identity (TAI) is in the list of "non-allowed tracking areas" and the UE is in connected mode, then the UE is not allowed to initiate any 5GSM procedure except for emergency services, high priority access or to indicate a change of 3GPP PS data off. Or if the UE is in idle mode, the service request procedure cannot be initiated to transition into connected mode and follow up with any 5GSM signalling (e.g. PDU session establishment) except if there is a request for emergency services, etc, as described above.

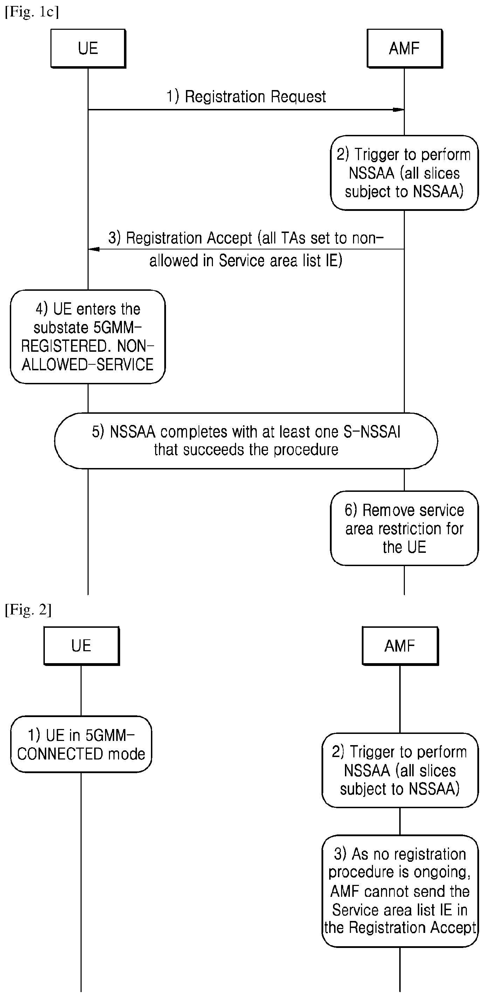

As quoted in the previous section above, when all the requested or default S-NSSAIs are subject to NSSAA, the AMF shall include the current registration area in the list of "non-allowed tracking areas" in the Service area list IE that is sent in the Registration Accept message. After NSSAA is performed and there is at least one S-NSSAI that has been allowed (i.e. for which NSSAA succeeded) the AMF *"shall remove the mobility restriction if the Tracking Areas of the Registration Area were previously assigned as a Non-Allowed Area due to pending Network Slice-Specific Authentication and Authorization"* as specified in [2]. Figure 1c depicts the AMF behaviour as described herein.

The above information is presented as background information only to assist with an understanding of the disclosure. No determination has been made, and no assertion is made, as to whether any of the above might be applicable as prior art with regard to the disclosure.

In the following, a Network Slice (NS) may be defined as a logical network that provides specific network capabilities and network characteristics. A NS may be identified by Single Network Slice Selection Assistance Information (S-NSSAI).

In the following examples, a network may include a User Equipment (UE), an Access and Mobility Management Function (AMF) entity, and a Session Management Function (SMF) entity.

A particular network function can be implemented either as a network element on a dedicated hardware, as a software instance running on a dedicated hardware, or as a virtualised function instantiated on an appropriate platform, e.g. on a cloud infrastructure. A NF service may be defined as a functionality exposed by a NF through a service based interface and consumed by other authorized NFs.

The 5G Core (5GC) AMF receives all connection and session related information from the UE (N1/N2) but is responsible only for handling connection and mobility management tasks. All messages related to session management are forwarded over the N11 reference interface to the SMF. The AMF performs the role of access point to the 5GC. The functional description of AMF is given in [1] clause 6.2.1.

The skilled person will appreciate that the present invention is not limited to the specific examples disclosed herein. For example:
·The techniques disclosed herein are not limited to 3GPP 5G.
·One or more entities in the examples disclosed herein may be replaced with one or more alternative entities performing equivalent or corresponding functions, processes or operations.
·One or more of the messages in the examples disclosed herein may be replaced with one or more alternative messages, signals or other type of information carriers that communicate equivalent or corresponding information.
·One or more further elements or entities may be added to the examples disclosed herein.
·One or more non-essential elements or entities may be omitted in certain examples.
·The functions, processes or operations of a particular entity in one example may be divided between two or more separate entities in an alternative example.
·The functions, processes or operations of two or more separate entities in one example may be performed by a single entity in an alternative example.
·Information carried by a particular message in one example may be carried by two or more separate messages in an alternative example.
·Information carried by two or more separate messages in one example may be carried by a single message in an alternative example.
·The order in which operations are performed and/or the order in which messages are transmitted may be modified, if possible, in alternative examples.

Certain examples of the disclosure may be provided in the form of an apparatus/device/network entity configured to perform one or more defined network functions and/or a method therefor. Certain examples of the disclosure may be provided in the form of a system comprising one or more such apparatuses/devices/network entities, and/or a method therefor.

At least the following problems exist in view of the related art:

### 1. Problem with the use of the Service area list for NSSAA

A) As described (quoted from [3]) in the previous section, when the R-NSSAI only includes S-NSSAIs that are subject to NSSAA, the AMF shall include the current registration area in the list of "non-allowed tracking areas" in the Service area list IE that is sent in the Registration Accept message.

Although not explicitly stated, the main objective with the use of the Service area list IE as described above is to disable the UE from initiating a service request procedure or from initiating 5GSM signalling when the network has a pending NSSAA and no allowed NSSAI is available for the UE. In fact this will not enable the UE to request a PDU session even with no S-NSSAI.

However, as indicated earlier, NSSAA is access agnostic and can also be performed over the non-3GPP access. As service area restriction is not applicable to the non-3GPP access, a different mechanism is therefore required to meet the same objective that is described above when NSSAA is performed over non-3GPP access. In fact it would be better to have the same/common method that applies to both 3GPP and non-3GPP access for the purpose of the listed objective above. With reference to Figure 1c, the inclusion of the Service area list IE in the Registration Accept message in Step 3 does not apply to non-3GPP access.

### 2. Removing service restriction at the UE

After NSSAA is performed and there is at least one S-NSSAI that is allowed for the UE, it is stated in [2] that the AMF shall remove the mobility restriction if the Tracking Areas of the Registration Area were previously assigned as a Non-Allowed Area due to pending Network Slice-Specific Authentication and Authorization.

However, the requirement on the AMF should not be local to it only i.e. if the AMF only locally removes the mobility restriction then the UE is still unaware of it and will remain incapable of initiating any signalling because the UE has received the Service area list IE with the TA set to "non-allowed tracking areas". Therefore, removing the mobility restriction by the AMF should also involve the UE so that the restriction is also removed in the UE thereby allowing it to request normal service. With respect to Figure 1c, the UE remains in sub-state 5GMM-REGISTERED.NON-ALLOWED-SERVICE (Step 4) while the AMF has removed the service area restriction for the UE.

### 3. Lack of a method to block services for a UE in connected mode for which the AMF decides to re-initiate NSSAA

As stated earlier, the AMF, e.g. based on local policies, may at any time initiate NSSAA for a UE for one or all the S-NSSAIs. If NSSAA needs to be re-initiated for all the S-NSSAIs, then a method is required to disable a UE from initiating any signalling to obtain normal services (except for emergency services, high priority access, etc) noting that the UE would have already received some TAs that are set to "allowed tracking areas" in the Service area list IE. As the UE may already be in connected mode when the AMF decides to re-initiate NSSAA, the AMF cannot use the Registration Accept message to include the current registration area in the list of "non-allowed tracking areas" in the Service area list IE as the UE may not have any trigger to initiate a registration procedure in connected mode. Hence, an alternative method is required for the AMF to do so. The problem is explained in Step 3 of Figure 2.

### 4. Race conditions between AMF initiated NSSAA procedure and UE/SMF initiated 5GSM procedures

The AMF may have a trigger to initiate NSSAA for at least one S-NSSAI. At the same time, the UE or the SMF may have a 5GSM procedure to initiate. These procedures should not be started as NSSAA may fail for an S-NSSAI for which a PDU session is established and hence may subsequently be released. Therefore, it is not useful to start more signalling for a PDU session that may be subject to release. A mechanism to avoid such race conditions is therefore required at the UE and the network. These race conditions also cover the case where 5GSM procedures are initiated by the SMF or the UE at the same time as the initiation of the NSSAA procedure, so a mechanism is required at the AMF to gracefully reject such 5GSM procedures.

### 5. Lack of AMF behavior when the UE requests to register on S-NSSAIs that are different from those for which NSSAA is ongoing

At initial registration, the UE may send a requested NSSAI with S-NSSAIs for which NSSAA is applicable. The AMF may, in the Registration Accept, send a configured NSSAI, an allowed NSSAI, and a pending NSSAI. As the C-NSSAI may contain up to 16 S-NSSAI entries, the UE may receive more S-NSSAI entries in the C-NSSAI (e.g. 16) than the total maximum number of S-NSSAIs entries that are in the A-NSSAI or P-NSSAI. For example, the UE may receive in the Registration Accept:
·A C-NSSAI as follows: A, B, C, D, E, F, G, H
·An A-NSSAI as follows: A, B
·A P-NSSAI as follows: C, D

The AMF may also initiate NSSAA for S-NSSAIs C and D. In the meantime, the UE may, based on requests from upper layers or local policy, send a new Registration Request message with the R-NSSAI set to {E, F, G, H}. The AMF behaviour in this case is not defined i.e. it is not clear if the AMF will reject the request, or continue with the ongoing NSSAI procedure for S-NSSAIs C and D, or terminate the existing NSSAA procedure.

### 6. Problem relating to performing NSSAA on default subscribed NSSAIs in certain scenarios

As stated in the background section, when the UE establishes a session and does not include S-NSSAI information and the UE has default subscribed S-NSSAIs, the AMF will pick an appropriate default S-NSSAI to determine the SMF to send the session request towards. If **all the default S-NSSAIs** in the subscribed S-NSSAIs require NSSAA, then the network needs to perform NSSAA on one or more of the default S-NSSAIs with the expectation that the procedure succeeds, otherwise the AMF is unable to pick a default S-NSSAI at time of session establishment.

However, in the case when all default S-NSSAIs require NSSAA, it is not clear whether NSSAA is always run on the default subscribed NSSAIs in certain scenarios as indicated in the table below:

### [Table 1]

**Table 1 - Scenarios for running NSSAA on default subscribed S-NSSAIs**

| Scenario | Details | NSSAA run on all the default subscribed S-NSSAIs marked for NSSAA? |
|---|---|---|
| 1 | UE does not include a Requested NSSAI in the Registration Request | Yes |
| 2 | UE registers with Requested NSSAI and all S-NSSAIs are not in the subscribed S-NSSAIs | Yes |
| 3 | UE included Requested NSSAI and all S-NSSAIs require NSSAA | Not specified |
| 4 | UE included Requested NSSAI and some S-NSSAIs require NSSAA | Not specified |
| 5 | UE includes Requested NSSAI and no S-NSSAIs require NSSAA | Not specified |

In scenario 1 and 2, the pending NSSAI that is sent to the UE will contain the default subscribed NSSAIs. If NSSAA fails for all of the default S-NSSAIs, then the network will start the Network Deregistration Procedure by sending cause #62 "No network slices available" and will include a Rejected NSSAI with a separate cause code for each Rejected S-NSSAI.

This is stated in [3] subclause 4.6.2.4 as:
*The network slice-specific authentication and authorization procedure can be invoked or revoked by an AMF for a UE supporting network slice-specific authentication and authorization at any time. After the network performs the network slice-specific re-authentication and re-authorization procedure:*
   *a) if network slice-specific authentication and authorization for some but not all S-NSSAIs in the allowed NSSAI fails; the AMF updates the allowed NSSAI and the rejected NSSAI accordingly using the generic UE configuration update procedure as specified in the subclause 5.4.4; or*
   *b) if network slice-specific authentication and authorization fails for all S-NSSAIs in the allowed NSSAI and the pending NSSAI, then AMF performs the network-initiated de-registration procedure and includes the rejected NSSAI in the DEREGISTRATION REQUEST message as specified in the subclause 5.5.2.3 except when the UE has a PD U session for emergency services or the UE is establishing a PDU session for emergency services. In this case the AMF shall send CONFIGURATION UPDATE COMMAND containing rejected NSSAI. After the PDU session for the emergency service is released, the AMF performs the network-initiated de-registration procedure as specified in the subclause 5.5.2.3.*
and subclause 5.5.2.3.1 as:
   *If the network de-registration is triggered due to network slice-specific authentication and authorization failure or revocation as specified in subclause 4.6.2.4, then the network shall set the 5GMM cause value to #62 "No network slices available" in the DEREGISTRATION REQUEST message. In addition, the AMF may include the rejected NSSAI IE in the DEREGISTRATION REQ UEST message.*

**Observation 1:** 5GMM will not allow a UE to be registered without having been authenticated with at least one S-NSSAI (whether that be default or non-default)

In scenario 3, it is not clear whether the AMF is supposed to include the default subscribed S-NSSAIs in the pending NSSAI when determining which S-NSSAIs to run NSSAA on. Currently [1] indicates that the determination of whether to include a default S-NSSAI in the Allowed NSSAI comes after the completed NSSAA procedure, and nothing is said about running NSSAA on the default S-NSSAIs:
*Once completed the Network Slice-Specific Authentication and Authorization procedure, if the AMF determines that no S-NSSAI can be provided in the Allowed NSSAI for the UE, which is already authenticated and authorized successfully by a PLMN, **and if no default S-NSSAI(s) could be added as described in step (A),** the AMF shall execute the Network-initiated Deregistration procedure described in TS 23.502 [3], clause 4.2.2.3.3, and shall include in the explicit De-Registration Request message the list of Rejected S-NSSAIs, each of them with the appropriate rejection cause value.* .
***(A)*** *Depending on fulfilling the configuration as described above, the AMF may be allowed to determine whether it can serve the UE, and the following is performed:*
   - *For the mobility from Evolved Packet System (EPS) to 5GS, the AMF first derives the serving PLMN value(s) of S-NSSAI(s) based on the Home Public Land Mobile Network (HPLMN) S-NSSAI(s) in the mapping of Requested NSSAI (in CM-IDLE state) or the HPLMN S-NSSAI(s) received from PGW-C(PDN Gateway Control plane)+SMF (in CM-CONNECTED state). After that the AMF regards the derived value(s) as the Requested NSSAI.*
   - *AMF checks whether it can serve all the S-NSSAI(s) from the Requested NSSAI present in the Subscribed S-NSSAIs (potentially using configuration for mapping S-NSSAI values between HPLMN and Serving PLMN), **or all the S-NSSAI(s) marked as default in the Subscribed S-NSSAIs in the case that no Requested NSSAI was provided or none of the S-NSSAIs in the Requested NSSAI are permitted,** i.e. do not match any of the Subscribed S-NSSAIs or not available at the current UE's Tracking Area (see clause 5.15.3).*
   - *If the AMF can serve the S-NSSAIs in the Requested NSSAI, the AMF remains the serving AMF for the UE. The Allowed NSSAI is then composed of the list of S-NSSAI(s) in the Requested NSSAI permitted based on the Subscribed S-NSSAIs and*/*or the list of S-NSSAI(s) for the Serving PLMN which are mapped to the HPLMN S-NSSAI(s) provided in the mapping of Requested NSSAI permitted based on the Subscribed S-NSSAIs, or, if neither Requested NSSAI nor the mapping of Requested NSSAI was provided or none of the S-NSSAIs in the Requested NSSAI are permitted, all the S-NSSAI(s) marked as default in the Subscribed S-NSSAIs and taking also into account the availability of the Network Slice instances as described in clause 5.15.8 that are able to serve the S-NSSAI(s) in the Allowed NSSAI in the current UE's Tracking Areas. It also determines the mapping if the S-NSSAI(s) included in the Allowed NSSAI needs to be mapped to Subscribed S-NSSAI(s) values. If no Requested NSSAI is provided, or the mapping of the S-NSSAIs in Requested NSSAI to HPLMN S-NSSAIs is incorrect, or the Requested NSSAI includes an S-NSSAI that is not valid in the Serving PLMN, or the UE indicated that the Requested NSSAI is based on the Default Configured NSSAI, the AMF, based on the Subscribed S-NSSAI(s) and operator's configuration, may also determine the Configured NSSAI for the Serving PLMN and, if applicable, the associated mapping of the Configured NSSAI to HPLMN S-NSSAIs, so these can be configured in the UE. Then Step (C) is executed.*
   - *Else, the AMF queries the Network Slice Selection Function (NSSF) (see (B) below).*

**Observation 2:** When performing NSSAA on the default S-NSSAIs, in Scenarios 1 and 2, the Pending NSSAI is sent in the Registration Accept message. However in Scenario 3 when all NSSAA fails on the S-NSSAIs in the requested NSSAI, it is not clear whether NSSAA can now be run on the default S-NSSAIs and how the UE can be made aware that such NSSAA is pending.

In scenario 4 and scenario 5, as the Allowed NSSAI can be populated, then currently it is not necessary for the network to run NSSAA on the default S-NSSAIs.

In all scenarios, however, the important factor is that NSSAA must always be run on the default S-NSSAIs when all the default S-NSSAIs are marked as requiring NSSAA because there should be at least one default S-NSSAI that is available for use when the UE establishes a PDU session with no S-NSSAI.

**Observation 3:** If the subscription is marked with one or more default S-NSSAIs, at least one of these S-NSSAIs should be available to allow for support of PDU session establishment when the UE did not include an S-NSSAI.

In summary: NSSAA ensures that the UE remains registered with a PLMN only when at least one slice is allowed for use (i.e. either does not require NSSAA or NSSAA has been successfully completed for the slice) including a default slice. Default slices are required for default SMF selection when no S-NSSAI is provided by the UE during PDU session establishment. In some scenarios, e.g. when the UE sends a Requested NSSAI, it is not specified how NSSAA will impact default slices as the UE may end up requesting the establishment of a PDU session but without selecting a corresponding S-NSSAI. The network and UE behaviour in this case is unspecified.

In view of the above problems, certain examples of the disclosure provide one or more of the following solutions.

### 1. Solution to block services from the UE during pending NSSAA

This section is applicable (at least to) the registration procedure and defines a common solution that works over both the 3GPP access and non-3GPP access instead of relying on a solution based on service area restriction that applies only for the 3GPP access.

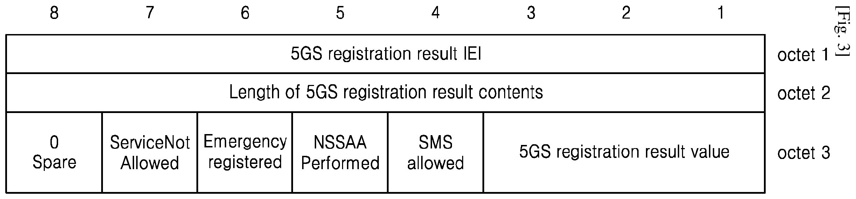

In order to block services (e.g. service request procedure or 5GSM procedures, except for emergency or high priority access) over the 3GPP access or non-3GPP access during pending NSSAA when no allowed NSSAI is available for the UE, it is proposed to define and use a new indication e.g. "ServiceNotAllowed" in the 5GS registration result IE that is included in the Registration Accept message. The new indication is shown in Figure 3 where bit 7 of the IE is used for this purpose.

When the AMF determines that no allowed NSSAI is available for the UE and NSSAA is pending, the AMF should set the "ServicesNotAllowed" bit in the 5GS registration result IE to 1 to indicate to the UE that all services or requests (service request, 5GSM procedures) should be blocked (except for emergency services or if the UE is a high priority access). Note that this indication can also be used to block the 5GSM procedures as follows:
·PDU session modification procedure for any slice or for any slice in the pending NSSAI IE. Note that this indication can be used to block a 5GSM procedure for a PDU session that is associated with no slice. For this purpose the UE should remember which PDU session was established with no S-NSSAI and hence block 5GSM procedures for that session upon receipt of the proposed indication.
·PDU session establishment for any slice in the pending NSSAI or for a PDU session that is associated with no S-NSSAI.

Alternatively, the existing "NSSAAPerformed" bit can be used by the AMF to achieve the same proposal above.

The new indication "ServiceNotAllowed" or the existing indication "NSSAAPerformed", hereafter referred to as indication to block services, can be used in conjunction with the pending NSSAI IE i.e. when the indication is sent to the UE along with a pending NSSAI IE, the AMF by doing so indicates that all services should be blocked for each of the S-NSSAIs in the pending NSSAA in addition to services associated with no S-NSSAI (noting that the UE can request a PDU session establishment with no S-NSSAI for which the AMF selects a default slice/SMF).

Upon receipt of the indication to block services in the 5GS registration result IE in the Registration Accept message, optionally with a Pending NSSAI IE, the UE should block all services for all slices including services that are associated with no S-NSSAI. As such, the UE should not attempt to establish a PDU session that is associated with no S-NSSAI (i.e. associated with a default slice) except if the request is for emergency services or if the UE is a high priority access UE. Additionally, the UE should block services for all the S-NSSAIs in the Pending NSSAI IE in the Registration Accept message.

Optionally, the UE may set a flag indicating that normal services are not allowed or are suspended. The flag may be a Boolean indicator locally in the UE. Alternatively, the UE may enter a new sub-state such as 5GMM-REGISTERED.SUSPENDED-SERVICE. As long as the flag is set (either a Boolean flag or the UE is in the new sub-state) then the UE is not allowed to initiate normal services as explained above.

To block services from upper layers for an S-NSSAI that is subject to NSSAA, when the 5GMM entity receives a 5GSM message or request from the 5GSM entity, along with the S-NSSAI that is subject to NSSAA, and services are blocked for a UE, then the 5GMM entity should indicate to the 5GSM entity that the message cannot be sent due to pending NSSAA procedure and indicate the S-NSSAIs that are subject to NSSAA (or are in the pending NSSAI). The 5GSM entity shall not send any 5GSM message or initiate any 5GSM procedure that is associated with an S-NSSAI for which NSSAA is pending as indicated by the 5GMM entity.

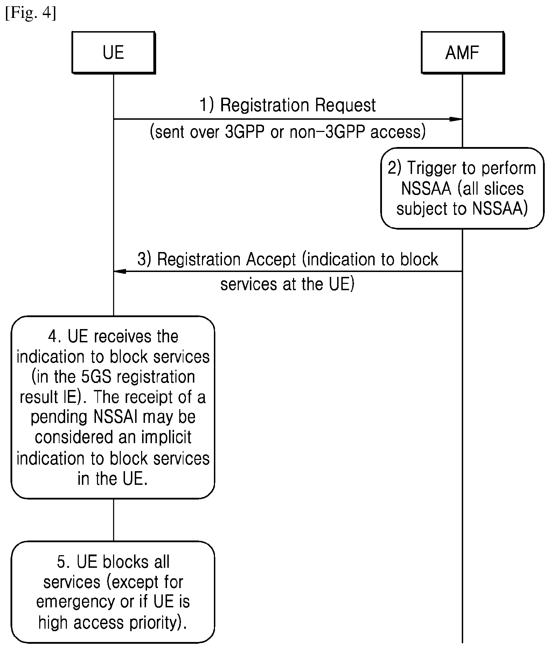

Figure 4 shows the overall proposal as per the description above to block services in the UE regardless of the access type.

Note that the solution to use service area restriction may be applied on the 3GPP access but the proposal above may be used when the UE is registering on the non-3GPP access. However, it is more efficient if one solution (as proposed above) is defined and used for both access types.

Note that the proposals above can be used, and are applicable, over the 3GPP access and the non-3GPP access. Moreover, the name of the indications are to be considered as examples and may be set to different values or name however the same proposals would apply.

### 2. Solution to resume normal services for a UE after NSSAA

To allow the UE to resume its normal services e.g. after some S-NSSAIs become allowed for the UE, the network should send the allowed NSSAI to the UE using the Configuration Update Command message.

Alternatively, a new indicator can be defined and used in the Configuration Update Command message to inform the UE that normal services can be resumed. For this purpose, the 5GS registration result IE can be used and sent to the UE in the Configuration Update Command message and bit 7 can be set to a value (e.g. zero) such that the UE is informed that normal services can be resumed.

If the service area restriction is still to be used for the 3GPP access, then when the network completes NSSAA for the UE and there is at least one S-NSSAI that is allowed, the AMF should send the Service area list IE and set the current registration area in the list of "allowed tracking areas" if all the tracking areas are allowed for the UE. Otherwise the Service area list IE should contain the list of tracking areas that are set to "allowed tracking areas" and "non-allowed tracking areas" according to the service area restriction that is applicable to the UE.

Alternatively, the AMF can inform the UE that services can be resumed by ensuring that no S-NSSAI remains in the pending NSSAA IE. This can be achieved by including:
·All the S-NSSAIs that have been allowed (i.e. have succeeded NSSAA) in the allowed NSSAI, if any
·All the S-NSSAIs that have not been allowed (i.e. have not succeeded NSSAA) in the rejected NSSAI, if any.

When the UE receives an allowed NSSAI or a new explicit indication to resume normal services, the UE deletes the flag i.e. either the UE sets the flag to 0 indicating normal services is allowed, or the UE enters 5GMM-REGISTERED.NORMAL-SERVICE.

Alternatively, when the UE, based on the received allowed NSSAI and/or rejected NSSAI, stores NSSAI information locally such that the pending NSSAI list is empty, the UE determines that normal services can now be resumed and may enter the appropriate state as described above.

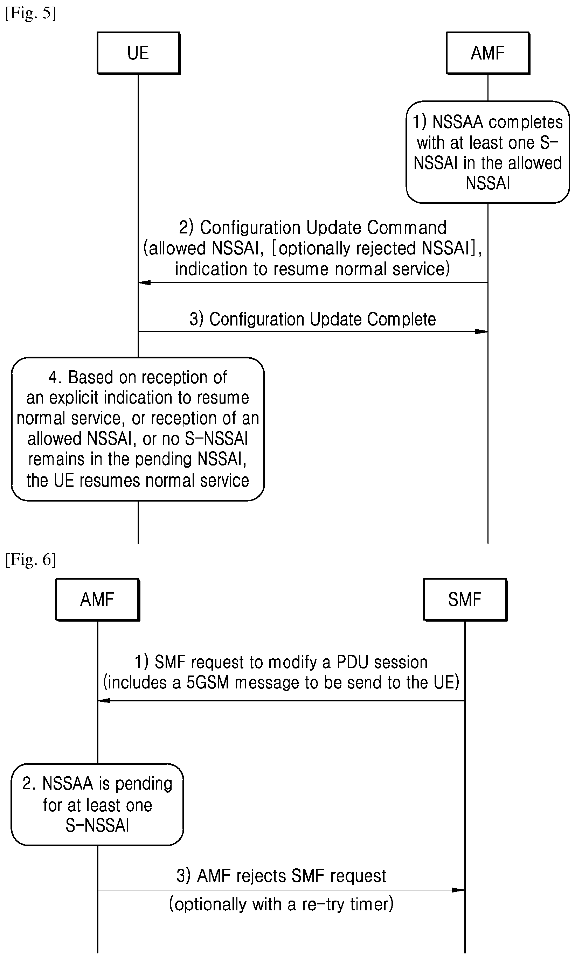

Figure 5 shows how normal services can be allowed for the UE.

After services are considered to be normal, or can be resumed as described above, the 5GMM entity may inform the 5GSM entity about the result and indicate that 5GSM procedures can now be initiated for the S-NSSAIs that are now in the allowed NSSAI.

The 5GSM entity may initiate any pending procedure if needed.

Note that all the proposals above can be used, and are applicable, over the 3GPP access and the non-3GPP access. Moreover, the name of the indications are to be considered as examples and may be set to different values or name however the same proposals would apply.

Note that an alternative solution to the above would be to also apply service area restriction to the non-3GPP access. With this, the existing solution can be re-used over the non-3GPP access as well. However, if the UE performs separate registrations over the 3GPP and non-3GPP access in the same PLMN (and AMF), then the network should set the Service area list IE to non-allowed for both the 3GPP and non-3GPP access if no allowed NSSAI is available and NSSAA is pending or ongoing. After at least one S-NSSAI is allowed, the network should update the UE's service area restriction for each of the accesses (i.e. set the service area list to allowed) for which at least one S-NSSAI is allowed.

### 3. Solution to re-initiate NSSAA for a UE in connected mode

As indicated earlier, the AMF at any time may decide to re-initiate NSSAA for a UE that is already registered and that has already received an allowed NSSAI. In fact the UE may also have at least one PDU session that has been established towards S-NSSAIs that have been allowed for the UE.

When NSSAA is to be re-initiated, the UE should not perform a 5GSM procedure that is associated with an S-NSSAI for which NSSAA is to be re-initiated. For example, if the UE has an allowed NSSAI with say S-NSSAIs {A, B}, if the NSSAA is to be re-initiated for the UE for both S-NSSAIs {A, B} then the UE should not:
·establish a PDU session towards any of the S-NSSAIs that are subject to NSSAA or
·modify any PDU session associated with an S-NSSAI for which NSSAA is now pending if the UE already has established a PDU session associated with the S-NSSAI in question.

To achieve this, the AMF should take the following actions:
·For each of the S-NSSAIs that is subject to NSSAA again, the AMF should include the S-NSSAI in the pending NSSAI and send the pending NSSAI list to the UE in the Configuration Update Command message
·Alternatively, the AMF can send the 5GS registration result IE to the UE in the Configuration Update Command message and indicate the NSSAA is pending by setting the "NSSAA Performed" to indicate that NSSAA is pending. The AMF should also include the list of pending NSSAI as proposed above.
·Alternatively, a new indication can be used to inform the UE that all services should be blocked. For example, the proposal in section 1 above can be re-used for this purpose i.e. the AMF can set the "ServiceNotAllowed" bit in the 5GS registration result IE to indicate that all services should be blocked in the UE. The AMF should also include the list of pending NSSAI as proposed above.
·Alternatively, if the NSSAA is to be performed, the AMF can send the Service area list IE and set the current registration area to "non-allowed tracking area" in the Configuration Update Command message. The AMF should also include the list of pending NSSAI as proposed above. As indicated earlier, this method can be used for the 3GPP access or can also be extended to the non-3GPP access.

Note that the proposals above can be performed after an inter-system change from S1 mode (a mode of a UE that operates with a functional division that is in accordance with the use of an S1 interface between the radio access network and the core network) to N1 mode (a mode of a UE allowing access to the 5G core network via the 5G access network) in either idle mode or connected mode i.e. the AMF should initiate NSSAA for the UE that moves from EPS to 5GS and take the actions proposed above.

The UE in connected mode, and optionally with at least one PDU session established, may receive a list of pending NSSAI and optionally an indicator to block services for all or a list of S-NSSAIs that are in the pending NSSAI. Upon reception of this indication, and optionally with a list of pending NSSAI, the UE takes all the actions that were proposed in section 1 above. If the UE has a PDU session already established and for which user-plane resources are already established, the UE may continue to send and/or receive data for the PDU session even if the associated S-NSSAI is in the pending NSSAI list or even if the AMF has initiated NSSAA for an S-NSSAI that is associated with the PDU session for which user-plane is already established.

Upon receipt of an indication that NSSAA is pending, or if the UE receives a 5GMM message from the AMF to perform NSSAA for an S-NSSAI for which a PDU session is already established, the UE should not initiate a PDU session modification procedure for the associated PDU session until NSSAA completes successfully for the S-NSSAI in question. However, the UE is allowed to send a PDU Session Release Request for the associated PDU session.

After NSSAA completes, the AMF may allow the UE to resume normal services as proposed in section 2 above.

### 4. Handling race conditions at the AMF

The AMF may determine to initiate NSSAA for a UE at any time for at least one S-NSSAI. The UE may already have established a PDU session that is associated with an S-NSSAI for which NSSAA is pending or is to be re-initiated at the AMF. However, the SMF or the UE may not be aware exactly when the AMF will initiate the process. In fact there may be collision cases in which the UE or the SMF initiate a 5GSM procedure that is associated with an S-NSSAI for which NSSAA is pending or is to be initiated at the AMF.

When the AMF initiates NSSAA for at least one S-NSSAI for which the UE already has an established PDU session, if the SMF initiates a PDU session modification procedure, the AMF should reject the procedure and indicate that NSSAA is pending for the S-NSSAI. Alternatively, the AMF may use a different cause code to temporary reject the request from the SMF. Upon receipt of this indication at the SMF, the SMF may refrain from initiating the procedure for a pre-determined time interval. The SMF may start a timer after whose expiry the SMF may re-initiate the procedure if the PDU session is still active. Alternatively, the timer to be started my be provided by the AMF in the reject message towards the SMF. Optionally, when NSSAA completes successfully for an S-NSSAI for which the AMF has rejected a request that was triggered by the SMF, the AMF may send a message to the SMF indicating the NSSAA is completed. The receipt of this message or indication at the SMF should then lead the SMF to stop any timer or resume normal service for the UE in question and initiate any pending 5GSM procedure. Figure 6 shows some of the proposals above:
Note that the SMF may initiate a PDU session release for a UE for which an S-NSSAI is pending NSSAA. In this case, the AMF should forward the 5GSM message to the UE even if NSSAA is pending for the associated S-NSSAI i.e. the AMF should allow the SMF to release a PDU session for the UE.

Similarly, the UE may send a PDU Session Modification Request to modify a PDU session for which the associated S-NSSAI is pending NSSAA. The UE sends the 5GSM message encapsulated in the UL NAS TRANSPORT message. Upon receipt of an UL NAS TRANSPORT message with the request type set to "modification request" (i.e. the AMF has routing context for the PDU session identified by the PDU session ID), if the S-NSSAI associated with the PDU session is subject to NSSAA or if the AMF has triggered/is about to trigger NSSAA for the S-NSSAI, then the AMF should:
·Not forward the 5GSM message to the SMF with which the session is established
·Send a DL NAS TRANSPORT message to the UE and include the 5GSM message that was not forwarded. The AMF may set the 5GMM cause to the 5GMM cause #90 "payload was not forwarded". Alternatively, the AMF should use a new 5GMM cause that indicates "5GSM message not forwarded due to pending NSSAA".

The AMF should proceed with the NSSAA procedure for the S-NSSAI in question. Alternatively, the AMF may abort the UL NAS TRANSPORT procedure and proceed with the NSSAA procedure for the S-NSSAI in question.

If the UE receives a DL NAS TRANSPORT message with a 5GSM message that is not forwarded, the 5GMM cause is set to "5GSM message not forwarded due to pending NSSAA" or 5GMM cause #90 "payload was not forwarded", and optionally the UE receives a pending NSSAI list that contains the S-NSSAI associated to the request (or receives an indication that the services are not allowed for the UE as proposed earlier), the UE shall not send any 5GSM procedure for the corresponding S-NSSAI until the:
·S-NSSAI is included in the allowed NSSAI, or
·The UE is informed that its services are not blocked (or that normal services can be resumed) as proposed in section 2 above.

However, during a pending NSSAA procedure for at least an S-NSSAI associated to which the UE may have already established a PDU session, the UE may send a PDU Session Release Request.

Upon reception of an UL NAS TRANSPORT message that contains a 5GSM message but the request type is not included UL NAS TRANSPORT message (i.e. either implying that a session is being released or 3GPP PS data off status is being modified), if the AMF has a pending NSSAA procedure for the associated S-NSSAI, the AMF shall forward the 5GSM message to the SMF.

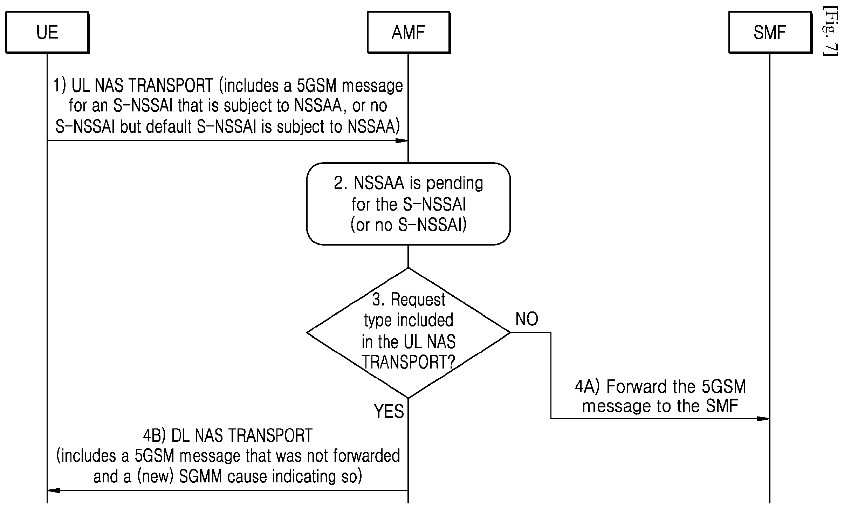

Figure 7 shows the proposed solution to address collision cases at the AMF after a UE initiated 5GSM procedure for an S-NSSAI that is pending NSSAA.

Note that the proposals above can apply to the case when the UE performs inter-working from EPS to 5GS in either idle mode or connected mode. After an inter-system change from EPS to 5GS, the UE currently performs a PDU session modification procedure to inform the network (SMF) of its 5GSM capabilities as specified in [3]. However, this occurs after the UE completes the registration procedure. The UE may refrain from performing the PDU session modification procedure for all S-NSSAIs that are in the pending NSSAI list if an S-NSSAI matches the S-NSSAI (received in the (e)PCO ((extended) protocol configured options) in EPS (or S1 mode)) that is associated with any of the Packet Data Network (PDN) connection/session that is being transferred from EPS until NSSAA completes. After the completed of NSSAA, the UE should then initiate the PDU session modification procedure for which the associated S-NSSAI has successfully completed NSSAA.

If the network does not allowed the UE to perform the modification procedure (i.e. to send PDU Session Modification Request) after the inter-system change, the AMF may apply the proposals above. Alternatively, the AMF may allow the 5GSM to be sent (i.e. the AMF forwards the 5GSM message to the corresponding SMF) after the first inter-system change from EPS to 5GS.

Alternatively, the AMF may indicate to the UE in the Registration Accept (that is sent to the UE after the inter-system change from EPS to 5GS) whether PDU session modification is allowed or not for those PDN connections that were established and S1 mode (EPS) and that are subject to inter-working with 5GS. The indication may be a new bit in the 5GS registration result IE. Alternatively, the indication may be implicit by the network indicating the "NSSAAPerformed" (i.e. setting the corresponding bit to 1) in the 5GS registration result IE.

If the UE, following an inter-system change from S1 mode (EPS) to N1 mode (5GS) receives an indication that NSSAA is pending or that PDU session modification is not allowed due to NSSAA, the UE should not perform PDU session modification for all the S-NSSAIs that are subject to NSSAA (i.e. that are in the pending NSSAI list) and that match the S-NSSAI of the PDN connection that was established in EPS. The UE shall perform the PDU session modification procedure after NSSAA completes for the S-NSSAI(s) i.e. after no S-NSSAI is included in the pending NSSAA list or after the S-NSSAI is provided in the allowed NSSAI. Otherwise i.e. if the UE is not informed that PDU session modification is not allowed (either explicitly or implicitly as described above), the UE can perform a PDU session modification after the inter-system change is completed and the registration procedure is completed.

Alternatively, the only case that may be allowed for the UE to perform PDU session modification procedure (i.e. send a PDU SESSION MODIFICATION REQUEST) in association to an S-NSSAI that is in the pending NSSAI could be after an inter-system change from S1 mode to N1 mode, or to report 3GPP PS DATA off status. For example, after an inter-system change from S1 mode to N1 mode, if the network sends the pending NSSAI list to the UE and optionally indicates "pendingNSSAA" in the 5GS registration result IE, the UE should refrain from sending 5GSM messages for all the S-NSSAIs that are associated with the PDU sessions being transferred and that are in the list of pending NSSAI. However, the UE may be allowed to send a PDU SESSION MODIFICATION REQUEST message after the first inter-system change from S1 mode to N1 mode if the session was first established in S1 mode. This would enable the UE to send its 5GSM capabilities to the SMF.

### 5. Defining the AMF behavior when the UE requests to register on at least one new S-NSSAI and NSSAA is already pending or ongoing for other S-NSSAIs

The UE may be provided a configured NSSAI with more S-NSSAI entries than those in both the allowed NSSAI and pending NSSAI. For example, the UE may receive in the Registration Accept:
·A C-NSSAI as follows: A, B, C, D, E, F, G, H
·An A-NSSAI as follows: A, B
·A P-NSSAI as follows: C, D

The AMF may have initiated NSSAA for some S-NSSAIs but NSSAA may not have terminated for all S-NSSAIs and as such the AMF may not have updated the UE with the allowed NSSAI containing the S-NSSAIs for which NSSAA has successfully completed.

Currently, as specified in [3], the UE triggers the registration procedure when the UE needs to change the slice(s) it is currently registered to. As such, the UE may send a Registration Request and include a requested NSSAI with S-NSSAI entries that may be totally different from those for which NSSAA is currently ongoing, or may have some S-NSSAI entries for which NSSAA is currently ongoing.

If the AMF is performing an NSSAA procedure and it receives a Registration Request, optionally over the same access type over which the NSSAA procedure is ongoing, with a requested NSSAI containing S-NSSAIs that are different from those for which NSSAA is ongoing, the AMF should:
·abort the existing NSSAA procedure and remove these S-NSSAIs from the list of S-NSSAIs for which NSSAA is pending.
·The AMF should handle the requested NSSAI accordingly. The AMF should update the pending NSSAI for the UE and determine which S-NSSAIs will be subject to NSSAA again. The AMF should provide an updated pending NSSAI to the UE (and optionally an updated allowed NSSAI or rejected NSSAI, based on the entries in the requested NSSAI) and initiate NSSAA for the S-NSSAIs that are subject to NSSAA.

Alternatively, if the AMF is performing an NSSAA procedure and it receives a Registration Request over a different access from that on which the AMF is performing NSSAA, where the requested NSSAI contains S-NSSAIs that are different from those for which NSSAA is ongoing, the AMF should also consider any new S-NSSAI, that is received in the requested NSSAI over the second access, as one that is subject to NSSAA and hence update the pending NSSAI list of the UE to include the additional S-NSSAI that has been requested. The AMF should perform NSSAA for all the S-NSSAI entries of the requested NSSAI each of which (i.e. the requested NSSAI) was received over a particular access type. As an example, if the UE sends a requested NSSAI with S-NSSAIs {1, 2} over the 3GPP access, and during NSSAA procedure the UE then registers over the non-3GPP access and sends a requested NSSAI with S-NSSAIs {3, 4}, the AMF should, if the latter S-NSSAIs are subject to NSSAA, then perform NSSAA for S-NSSAIs {1, 2, 3, 4}. If one of the entries of the requested NSSAI that is sent over a second access is the same as one of the entries of the requested NSSAI that was previously received over a first access and that S-NSSAI is subject to NSSAA, then the AMF performs NSSAA once for that entry. However, if NSSAA has already been performed then the AMF need not perform NSSAA again.

It is therefore proposed to allow the UE to request an S-NSSAI entry (i.e. to include it in the requested NSSAI) which is already in a pending NSSAI list if the UE is registering over a second access to the same PLMN even if the UE has requested the same S-NSSAI when it registered over a first access. For example, the UE may perform initial registration over the 3GPP access and the network may send a list of pending NSSAI and then the network initiates NSSAA. The UE may then perform an initial registration to the same PLMN but over the non-3GPP access. In this case the UE can still send a requested NSSAI with an S-NSSAI entry that is in the pending NSSAI that has been received by the UE over the first access (i.e. 3GPP access in our example). Note that the examples provided regarding 3GPP being a first access and non-3GPP being a second access are not to be interpreted as limiting. Hence, in other cases, the non-3GPP access may be the first access and the 3GPP access may be the second access and the proposal above would still apply. The proposal regarding allowing the UE to request an S-NSSAI over a second access type, even if the S-NSSAI is in the pending NSSAI that was received over a first access, is required because otherwise the network will not know that the UE wants to use the S-NSSAI over the second access type. Although NSSAA is access agnostic, the allowed NSSAI is not access agnostic and hence the UE needs to request the slice in order to be provided with an allowed NSSAI containing that slice if NSSAA succeeds for the slice and the network allows the slice for that access type.

If the AMF is performing an NSSAA procedure and it receives a Registration Request with a requested NSSAI containing S-NSSAIs for which NSSAI is ongoing and S-NSSAIs that are different from those for which NSSAA is ongoing, then the AMF should:
·For all S-NSSAIs that were previously received, for which NSSAA is pending, and that are not in the new requested NSSAI the AMF should abort any ongoing NSSAA procedure and remove these S-NSSAIs from the list of S-NSSAIs for which NSSAA is pending.
   ∘ Optionally, the AMF aborts the NSSAA for these S-NSSAIs if the requested NSSAI has been received over the same access type as the previous requested NSSAI that triggered the NSSAA. Otherwise the AMF should consider the entries in the new requested NSSAI (that was sent over the second access type) as additional S-NSSAIs that require NSSAA and add them to the pending NSSAI list. The AMF should update the UE with the new pending NSSAI list.
·For all the S-NSSAIs are in the requested NSSAI and for which NSSAA is pending, if these S-NSSAIs were previously received and the AMF has a pending NSSAA procedure for them, or has completed NSSAA for them, the AMF should continue the NSSAA procedure for these S-NSSAIs and save any outcome of NSSAA that may have been completed for these S-NSSAIs.
·The AMF should handle the requested NSSAI accordingly. The AMF should update the pending NSSAI for the UE and determine which S-NSSAIs will be subject to NSSAA again. The AMF should provide an updated pending NSSAI to the UE (and optionally an updated allowed NSSAI or rejected NSSAI, based on the entries in the requested NSSAI) and initiate NSSAA for the S-NSSAIs that are subject to NSSAA.

If the UE has a configured NSSAI, optionally an allowed NSSAI, and a pending NSSAI, and the UE wants to register to some new slices from the configured NSSAI that are not in the allowed NSSAI or pending NSSAI, or both, the UE should send a Registration Request message with a new requested NSSAI as follows:
·If the UE wants to register to different slices that are not in the allowed NSSAI (if any) or are not in the pending NSSAI, the UE should send a requested NSSAI with S-NSSAI entries that are in the configured NSSAI list but are not in the not in the allowed NSSAI (if any) or are not in the pending NSSAI.
·If the UE wants to register to different slices but also wants to use a slice that is either in the allowed NSSAI (if any) or in the pending NSSAI, then the UE should send a requested NSSAI with the new S-NSSAIs from the configured NSSAI, and S-NSSAIs from the allowed NSSAI (if any) or from the pending NSSAI that the UE wants to register to.
·If the UE is registering to the same PLMN but over a second/different access type from which the UE has already sent a registration request and has receiving a list of pending NSSAI, if the UE wants to use the S-NSSAIs, that are in the pending NSSAI list, over the second access type that the UE is currently registering over, the UE should send a requested NSSAI and include the S-NSSAIs that it needs to register with even if these S-NSSAIs are in the list of pending NSSAI.

∘ The proposal above also requires that when the UE receives a pending NSSAI list, the UE should, for each S-NSSAI that is in the list of pending NSSAI, remove any S-NSSAI entry from the allowed NSSAI that matches an S-NSSAI entry in the pending NSSAI list. However, the allowed NSSAI from which the entry is removed should be the allowed NSSAI for the access type over which the UE is currently registering. This is because the allowed NSSAI is access specific and removing the S-NSSAI from the allowed NSSAI for all access types will be problematic in the following cases:
   § Assume the UE has an allowed NSSAI for 3GPP access containing S-NSSAIs {A, B}
   § Assume the UE has an allowed NSSAI for non-3GPP access containing S-NSSAIs {B, C}
   § If the UE registers over a first access, as an example say 3GPP access, and gets a pending NSSAI list containing S-NSSAIs {A, B}, and if the UE deletes {A, B} from the allowed NSSAI of 3GPP access and deletes {B} from the allowed NSSAI of the non-3GPP access, then even if NSSAA succeeds, the UE will never have {B} in the allowed NSSAI for the non-3GPP access unless the UE registers with the non-3GPP access and then gets {B} as an allowed NSSAI entry. Therefore, when deleting an S-NSSAI from an allowed NSSAI list because the S-NSSAI is in the pending NSSAI, the deletion should only occur for the allowed NSSAI that is associated with the access type over which the pending NSSAI list is received or over which the UE is currently registering, or over which the network is performing NSSAA.

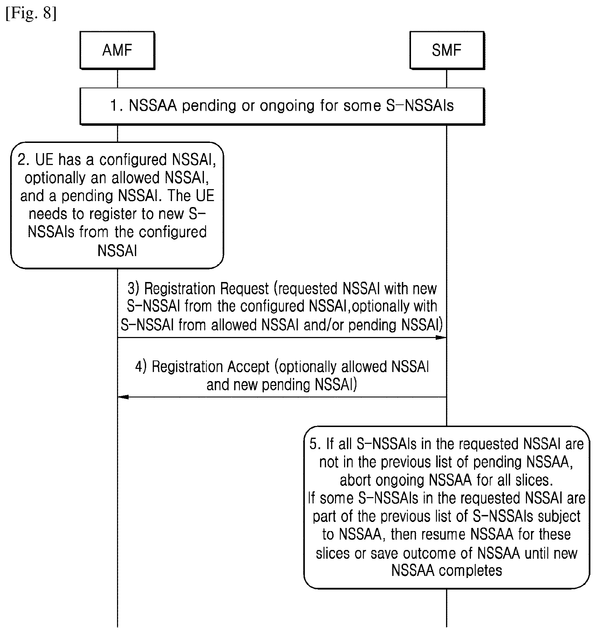

Figure 8 shows the overall handling at the AMF noting that the indicates steps may occur in different orders e.g. step 5 may occur as part of step 4 or before step 4.

The proposals herein and names of indications, etc, are to be used as examples and are not to be considered as limiting of the solution. Different names of bits or indications can be used and the solutions should still apply.

In the calls flows provided, the steps indicated may occur in different order than those shown and the proposals can also apply similarly in these cases.

### 6. Solutions to Problem 6

### Solution 1a: Mandate inclusion of the default S-NSSAIs in Pending NSSAI at time of Registration

This solution mandates that in all cases where all the subscribed NSSAIs that are marked as default and require NSSAA, then these S-NSSAIs must always be included in the Pending NSSAI during the registration procedure. For this purpose, the Pending NSSAI IE should be modified such that more than 8 S-NSSAIs can be sent in the IE. The Pending NSSAI should be allowed to carry 16 S-NSSAIs. This is because the UE may send (a maximum of) 8 S-NSSAIs in the Requested NSSAI IE. If additionally the AMF has at least one default S-NSSAI for which NSSAA is pending, and all the entries in the Requested NSSAI IE are also subject to NSSAA, then including the requested S-NSSAIs and the default S-NSSAI(s) in the Pending NSSAI IE will require that the IE carries more than 8 entries. By increasing the size of the Pending NSSAI IE to 16 elements would also mean that the Allowed NSSAI would need to increase to 16 elements to cater for the scenario where there were 8 S-NSSAIs in the Requested NSSAI needing NSSAA and there were (for example) 3 default S_NSSAIs that all required NSSAA. In this case the Pending NSSAI would carry 11 elements, and if NSSAA was successful on all the S-NSSAIs in the requested NSSAI and the default S-NSSAIs, then the AMF would indicate this success using the Configuration Update Command message with an Allowed NSSAI set to 11 elements.

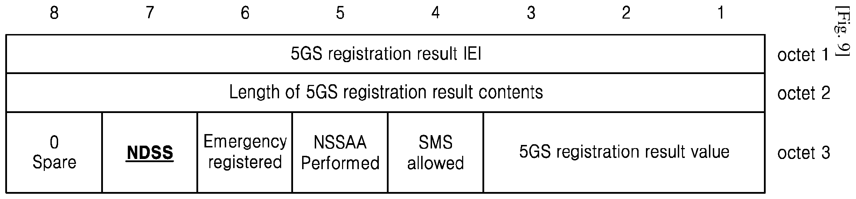

Additionally, if NSSAA fails on all the default S-NSSAIs, the AMF should indicate to the UE that NSSAA has failed for all default slices. The AMF can provide this indication to the UE in the Configuration Update Command message. This indication can be sent in a new IE, e.g. with the use of a 1 bit indicator. This bit can be called, as an example, the NDSS bit - "NSSAA for default slices" - indication where the value 1 (one) may mean "NSSAA for default slices successful" and the value 0 (zero) may mean "NSSAA for default slices unsuccessful". Alternatively, an existing IE in the Configuration Update Command message can be used for this purpose where 1 bit can be defined as explained above. For example, the 5GS registration result IE can be updated to include the new bit indicator as shown in Figure 9.

The AMF can also send this indication in another NAS message e.g. in the Registration Accept message. This can happen when the network decides, based on local policies or subscription change, the AMF may revoke authorization for all default slices and therefore during the registration procedure the AMF may indicate to the UE that the use of default slices is not authorized. The AMF can indicate this to the UE as proposed above. Note that the indication can also be that the default slices are not allowed and therefore the AMF will set the bit to the corresponding/appropriate value.

At any time when the status changes in the network i.e. regarding the use of default slices for a UE, the network may send a Configuration Update Command message and inform the UE whether the use of default slices is permitted or not. For example, if the policies in the AMF change, or due to a change in subscription information, the AMF may at any time initiate NSSAA for the default S-NSSAI(s). To do so, the AMF should send a new pending NSSAI list to the UE including the S-NSSAIs that are subject to NSSAA. After the completion of the procedure, and if NSSAA is successful for at least one S-NSSAI, or if one default slice becomes allowed for the UE without need to perform NSSAA, the AMF should send a Configuration Update Command message to the UE and indicate that a default slice is now allowed.

When a UE receives an indication that NSSAA for default slices has not succeeded (or any other similar indication e.g. use of default slices is not permitted due to NSSAA), the UE shall not initiate any 5GSM procedure (e.g. PDU session establishment procedure) that is associated with no S-NSSAI. The 5GMM entity in the UE may inform the 5GSM entity that no 5GSM procedure is allowed if the procedure is associated with no S-NSSAI. Similarly, the 5GSM entity in the UE may provide a similar indication to the upper layers in the UE.

When a UE receives an indication that the use of default slices is permitted, the UE may allow the initiation of 5GSM procedures (e.g. PDU session establishment procedure) that are associated with no S-NSSAI (or that are not associated with any S-NSSAI). The 5GMM entity may inform the 5GSM entity about this, and the latter may also inform the upper layers about this.

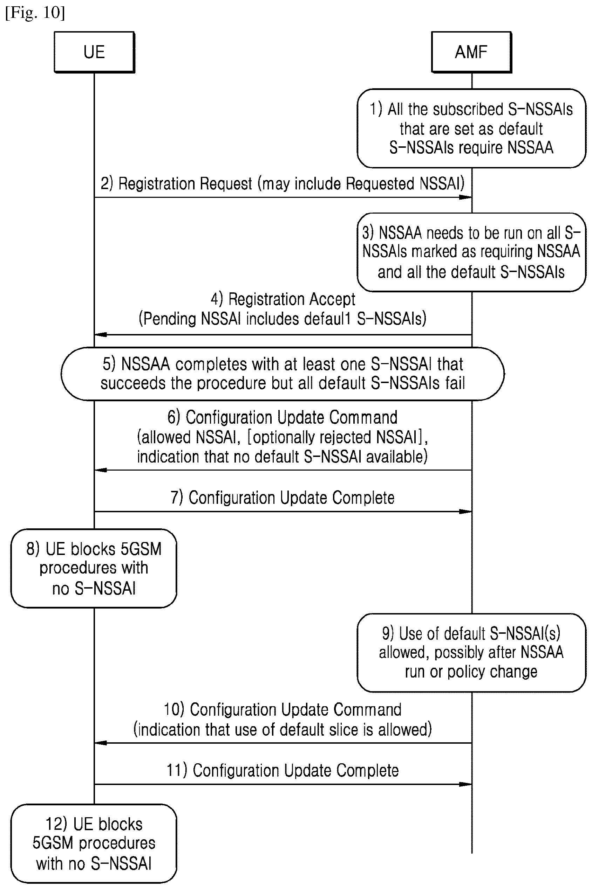

Figure 10 shows the overall proposal. Note that some messages (e.g. Registration Complete from the UE) may have been omitted for brevity.

### Solution 1b: Perform NSSAA on the defaults at time of registration without impacting the pending NSSAI.

In a variation of solution 1 without impacting the sizes of the Pending NSSAI and Allowed NSSAI, where all the default S-NSSAIs require NSSAA, the network behaviour depends upon whether an Allowed NSSAI could be determined on the contents of the requested NSSAI or an Allowed NSSAI could **not** be determined on the contents of the requested NSSAI. The default behaviour is that the UE is allowed to send PDU sessions with no S-NSSAI.

### Scenario 1: When an Allowed NSSAI could not be determined on the contents of the requested NSSAI

This covers the cases 3, 4 and 5 in Table 1 when Allowed NSSAI could not be determined because:
a) the S-NSSAIs in the requested NSSAI which did not require NSSAA were not available; and
b) the S-NSSAIs in the requested NSSAI that required NSSAA were not successful in passing NSSAA.

In this scenario, the AMF needs to run NSSAA on all the default S-NSSAIs, to determine if an Allowed NSSAI can be sent in the Configuration Update Command message or whether the AMF needs to deregister the UE.

Once the AMF has run NSSAA:
a) If NSSAA fails on all of the default S-NSSAIs, then the AMF deregisters the UE.
b) If NSSAA passes on at least one default S-NSSAI, then the AMF will set the Allowed NSSAI to contain the default S-NSSAI(s) in the Configuration Update Command message. A Rejected NSSAI may be included to convey the failure of NSSAA for the S-NSSAIs in the requested NSSAI that required NSSAA. There is no need to send the indication in the Configuration Update Command message (specified in solution 1) to indicate to the UE that sending PDU session establishment with no slice is not permitted, because the Allowed NSSAI contains an S-NSSAI which is a default S-NSSAI. Alternatively, the AMF can send the Configuration Update Command message (specified in solution 1) to indicate to the user that sending PDU session establishment with no slice is indeed permitted.

### Scenario 2: When an Allowed NSSAI could be determined on the contents of the requested NSSAI

This covers cases 3, 4 and 5 in Table 1 when Allowed NSSAI could be determined by either:
a) sending Registration Accept with an Allowed NSSAI but no Pending NSSAI
b) sending Registration Accept with an Allowed NSSAI and Pending NSSAI, followed by Configuration Update Command to convey the results of NSSAA on the S-NSSAIs in the Pending NSSAI (i.e. containing Allowed NSSAI and/or Rejected NSSAI); or
c) sending Registration Accept with no Allowed NSSAI but with Pending NSSAI, followed by Configuration Update Command to convey the results of NSSAA on the S-NSSAIs in the Pending NSSAI. In this case the Configuration Update Command must contain an Allowed NSSAI.

In these cases, as an Allowed NSSAI was determined on the contents of the requested NSSAI (either with or without NSSAA being required), then the AMF will not include any default S-NSSAIs in the Allowed NSSAI. The AMF runs NSSAA on all the default S-NSSAIs (this can be done at the time of registration) and if all the procedures fail, the AMF must include the indication (defined in solution 1) in the Configuration Update Command to indicate that to the UE that sending PDU session establishment with no slice is not permitted. If policy of the AMF changes or NSSAA is re-run on default S-NSSAI(s) and they pass, then the AMF will need to include the indication (defined in solution 1) in the Configuration Update Command to indicate to the UE that sending PDU session establishment with no S-NSSAI is now permitted.

In summary, solution 2 always assumes that PDU session establishment with no S-NSSAI is allowed because the AMF created an allowed NSSAI from a default S-NSSAI or NSSAA passed on the default S-NSSAIs when the default S-NSSAIs are not included in the allowed NSSAI. Solution 2 uses the indication defined in Solution 1 only when the AMF determines that NSSAA on all the default S-NSSAIs fails.

### Solution 2: Invoke NSSAA at the time of PDU Session Establishment

This solution requires the network to reject the PDU session establishment request with either an existing cause code e.g. 5GMM cause #90, indicating that the payload was not forwarded or by returning a new cause code indicating that no default S-NSSAI was available due to (pending) NSSAA. Note that this solution may be used if no default slice is allowed for the UE or if NSSAA for default slices is pending for the UE.

If the network (e.g. AMF) determines that NSSAA is pending for default slices for the UE, the network uses the Configuration Update Command to inform the UE that NSSAA is pending on the default S-NSSAIs as proposed in the section above (or that requests with no S-NSSAI for default slices cannot be sent). The network then performs NSSAA and updates the UE using the Configuration Update Command with the results of the NSSAA by updating the allowed NSSAI and/or rejected NSSAI and/or by informing the UE about whether the use of default slices is allowed or not (based on the result of NSSAA). If all the default S-NSSAIs failed NSSAA, then the network could include an indication that no default S-NSSAIs were available.

Upon reception of a DL NAS Message that includes a 5GSM message that was not forwarded, and a new 5GMM cause indicating that the use of default slices is not allowed due to NSSAA (or that NSSAA is pending for default slices), the UE should forward the 5GSM message and the 5GMM cause to the 5GSM entity. The UE should not attempt to send any other 5GSM message, or should not initiate a 5GSM procedure, that is associated with no S-NSSAI. The UE can later send a 5GSM message, or initiate a 5GSM procedure, that is associated with no S-NSSAI if an explicit indication is received from the network that the use of default slices is allowed (e.g. based on the proposal in the previous section). If so, the 5GMM entity should inform the 5GSM entity that the use of default slices is now allowed. The UE can then resume 5GSM procedures that are not associated with any slice (or that are associated with no S-NSSAI).

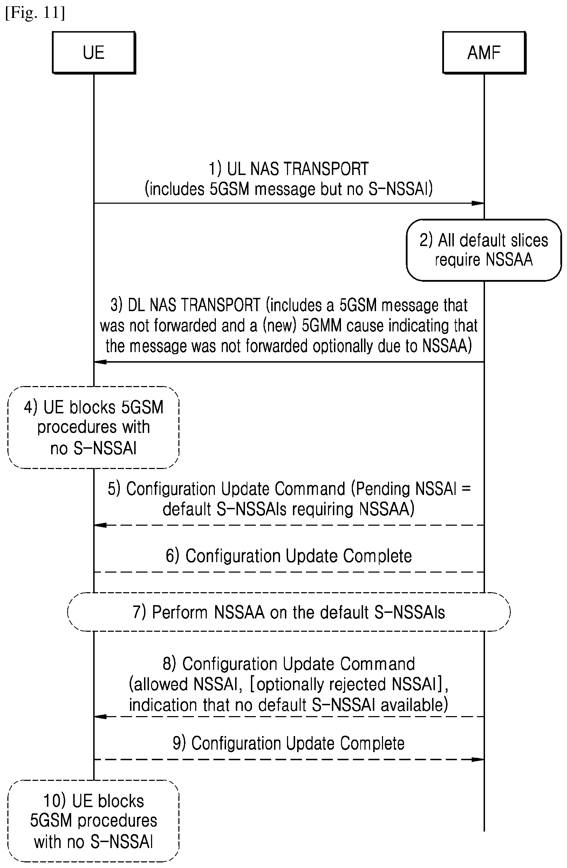

Figure 11 shows a sample signal flow with the proposed solution noting that some messages may not be shown for brevity. Also, some of the steps shown may occur in different orders and therefore the figure should not be interpreted as one that represents a solution which strictly follows the order of events/messages shown.

As an alternative to performing NSSAA, the conditions at the network side for determining an S-NSSAI could be updated such that the network is able to apply a policy to select when there are default S-NSSAIs, but none of them are available.

If the network were to re-use an existing cause code to send the 5GSM message that was not forwarded (by the AMF to the SMF), as proposed above, back to the UE in the DL NAS Transport message, the UE may re-try the request again. This may cause unnecessary and undesired signalling in the network especially if the network decides to not run NSSAA for default slices and when no default slice is available/allowed for the UE. To avoid this potential unnecessary signalling, the network may send back the Back-off timer IE (see [3]) to back the UE off from re-trying. The network may also include the Re-attempt indicator IE (see [3]) to indicate whether the UE is allowed to re-try in the equivalent PLMN(s) or not. Note that the network may also send the Back-off timer IE and/or the Re-attempt indicator IE even if a new 5GMM cause is used as proposed above. When the UE receives a Back-off timer value IE in a DL NAS Transport message, the UE should start a timer with the received value and refrain from sending any 5GSM request that is associated with the S-NSSAI, or no S-NSSAI (if none was sent), that was included (or not included in case of no S-NSSAI) in the UL NAS Transport message. The UE may re-try the request upon expiry of the timer or when the UE gets an explicit indication that a slice is now allowed for use i.e. when the UE gets an explicit indication that:
The use of a default slice is now allowed, if the Back-off timer value IE was received for a 5GSM request for which no S-NSSAI was included, or
The use of a particular S-NSSAI is now allowed e.g. if the S-NSSAI is included in the allowed NSSAI, if the Back-off timer IE was received for a 5GSM request for which the S-NSSAI was sent by the UE.

### Summary

Solution 1a/1b provides:
New behaviour at the AMF to always mandate NSSAA at the network on receipt of the Registration Request when all default S-NSSAIs are set to requiring NSSAA.
Inclusion of a parameter in the Configuration Update Command indicating when no default S-NSSAIs are available to use / default S-NSSAIs are available to use.

Solution 2 provides:
New behaviour at the AMF to reject the PDU Session Establishment Request when no default S-NSSAI is available when the PDU Session Establishment Request contained no S-NSSAI.
Inform the UE with the Configuration Update Command that NSSAA is pending on the default S-NSSAIs.
Perform NSSAA due to the PDU Session Establishment Request rejection.
Inclusion of a parameter in the Configuration Update Command when no default S-NSSAIs are available to use.
Inclusion of a parameter in the Configuration Update Command when default S-NSSAIs are available to use.

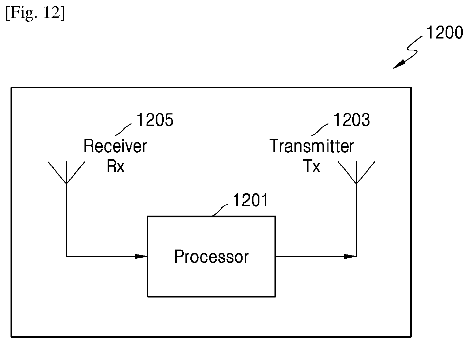

Figure 12 is a block diagram of an exemplary network entity that may be used in examples of the disclosure. For example, the UE, AMF and/or SMF may be provided in the form of the network entity illustrated in Figure 12. The skilled person will appreciate that the network entity illustrated in Figure 12 may be implemented, for example, as a network element on a dedicated hardware, as a software instance running on a dedicated hardware, or as a virtualised function instantiated on an appropriate platform, e.g. on a cloud infrastructure.

The entity 1200 comprises a processor (or controller) 1201, a transmitter 1203 and a receiver 1205. The receiver 1205 is configured for receiving one or more messages or signals from one or more other network entities, for example one or more of the messages illustrated in Figures 1 to 11. The transmitter 1203 is configured for transmitting one or more messages or signals to one or more other network entities, for example one or more of the messages illustrated in Figures 1 to 11. The processor 1201 is configured for performing operations as described above in relation to Figures 1 to 11. For example, the processor 1201 is configured for performing the operations of a UE, AMF and/or SMF.

The techniques described herein may be implemented using any suitably configured apparatus and/or system. Such an apparatus and/or system may be configured to perform a method according to any aspect, embodiment, example or claim disclosed herein. Such an apparatus may comprise one or more elements, for example one or more of receivers, transmitters, transceivers, processors, controllers, modules, units, and the like, each element configured to perform one or more corresponding processes, operations and/or method steps for implementing the techniques described herein. For example, an operation/function of X may be performed by a module configured to perform X (or an X-module). The one or more elements may be implemented in the form of hardware, software, or any combination of hardware and software.

It will be appreciated that examples of the present disclosure may be implemented in the form of hardware, software or any combination of hardware and software. Any such software may be stored in the form of volatile or non-volatile storage, for example a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

It will be appreciated that the storage devices and storage media are embodiments of machine-readable storage that are suitable for storing a program or programs comprising instructions that, when executed, implement certain examples of the disclosure. Accordingly, certain example provide a program comprising code for implementing a method, apparatus or system according to any example, embodiment, aspect and/or claim disclosed herein, and/or a machine-readable storage storing such a program. Still further, such programs may be conveyed electronically via any medium, for example a communication signal carried over a wired or wireless connection.

Although the disclosure has been described with an exemplary embodiment, various changes and modifications may be suggested to one skilled in the art. It is intended that the disclosure encompass such changes and modifications as fall within the scope of the appended claims.

According to various embodiments of the disclosure, a method, for a UE, for performing a Network Slice-Specific Authentication and Authorization (NSSAA) procedure in a network comprising the UE and a first network entity (e.g. AMF entity) is provided. The method comprises: in response to transmitting, to the first network entity, a first message (e.g. a Registration Request message) for initiating a first procedure (e.g. a network procedure, e.g. a registration procedure), receiving, from the first network entity, a second message (e.g. a Registration Accept message); determining whether a first condition is satisfied, the first condition comprising: the second message includes a predefined indication; and determining whether to block or restrict one or more second procedures (e.g. network procedures) based on the first condition.

In an embodiment of the disclosure, the indication comprises one or more of: an indication (e.g. indicator) in an Information Element (e.g. 5GS registration result IE); an indication that NSSAA is pending; an indication of one or more network slices for which NSSAA is pending (e.g. in a pending NSSAI IE); an indication that NSSAA is to be performed (e.g. a "NSSAA to be performed" bit); and an indication that the one or more second procedures are not allowed (e.g. a "ServicesNotAllowed" bit).

In an embodiment of the disclosure, the blocking or restricting comprises blocking or restricting the one or more second procedures optionally for one or more indicated network slices for which NSSAA is pending.

In an embodiment of the disclosure, the method further comprises determining whether a second condition is satisfied, the second condition comprising: the second message includes an indication (e.g. "NSSAA to be performed" bit and/or pending NSSAI IE) of one or more network slices for which NSSAA is pending, and the blocking or restricting comprises blocking or restricting the one or more second procedures based on the second condition.

In an embodiment of the disclosure, the blocking or restricting comprises blocking or restricting one or more of: initiating a 5GSM procedure; performing a registration procedure; and initiating a service request procedure.

In an embodiment of the disclosure, the determining whether to block or restrict comprises unconditionally allowing one or more predefined first types of procedure (e.g. network procedure).

In an embodiment of the disclosure, the determining whether to block or restrict comprises blocking or restricting one or more predefined second types of procedure (e.g. types of procedure not being one of the first types of procedure).

In an embodiment of the disclosure, determining whether to block or restrict comprises: in response to a request to perform a second procedure, determining whether the requested second procedure comprises one of the predefined first types of procedure; and if the requested second procedure comprises one of the predefined first types of procedure, determining to allow the requested second procedure.

In an embodiment of the disclosure, the determining whether to block or restrict comprises: if the requested second procedure does not comprise one of the predefined first types of procedure, determining to block the requested second procedure.

In an embodiment of the disclosure, the one or more predefined first types of procedure comprise one or more of: emergency services; high priority access; and request the release of a PDU session.

In an embodiment of the disclosure, the first message is transmitted over one of: 3GPP access; and non-3GPP access.

In an embodiment of the disclosure, the method further comprises determining whether a third condition is satisfied, the third condition comprising: no allowed NSSAI is available for the UE, wherein an allowed NSSAI is network slice not subject to NSSAA or for which NSSAA has been successfully performed, and the blocking or restricting comprises blocking or restricting the one or more second procedures based on the third condition.

In an embodiment of the disclosure, the method further comprises: in response to receiving an indication that one or more allowed NSSAI are available for the UE, determining to allow the one or more second procedures optionally for the allowed NSSAI.

In an embodiment of the disclosure, the one or more second procedures include one or more procedures that were previously blocked or restricted and are subsequently allowed.

In an embodiment of the disclosure, the method further comprises: setting a flag and/or entering a first sub-state (e.g. 5GMM-REGISTERED.SUSPENDED-SERVICE) when it is determined that the one or more second procedures are blocked or restricted.

In an embodiment of the disclosure, the method further comprises: informing, by a 5GMM entity, an 5GSM entity that the UE has set the flag and/or entered the first sub-state, whereby the 5GSM entity shall not send any 5GSM message or initiate any 5GSM procedure associated with a network slice for which NSSAA is pending, optionally unless the 5GSM message or 5GSM procedure relates to one or more predefined types of procedure (e.g. emergency services, high priority access and/or request the release of a PDU session).

In an embodiment of the disclosure, the method further comprises: clearing a flag and/or entering a second sub-state (e.g. 5GMM-REGISTERED.NORMAL-SERVICE) when one or more allowed NSSAI are available for the UE (e.g. when determining that no restrictions apply, for example when one or more allowed NSSAI are received).

In an embodiment of the disclosure, the method further comprises: informing, by a 5GMM entity, a 5GSM entity that the UE has cleared the flag and/or entered the second sub-state, whereby the 5GSM entity may send a 5GSM message or initiate a 5GSM procedure.

According to various embodiments of the disclosure, a method, for a first network entity (e.g. AMF entity), for performing a Network Slice-Specific Authentication and Authorization (NSSAA) procedure in a network comprising a UE, the first network entity and a second network entity (e.g. a SMF entity) is provided. The method comprises: initiating the NSSAA procedure for a network slice; receiving, from the UE, a request related to the network slice; and determining whether or not to forward a message corresponding to the request to the second network entity based on a condition, the condition comprising: the NSSAA procedure for the network slice is pending, is ongoing, is unsuccessful, and/or has not successfully completed.

In an embodiment of the disclosure, the request comprises a request to modify a PDU session for the network slice.

In an embodiment of the disclosure, the message comprises a session management message.

In an embodiment of the disclosure, the request is received through an UL NAS TRANSPORT message.

In an embodiment of the disclosure, the NAS TRANSPORT message comprises and/or contains a request type.

In an embodiment of the disclosure, the request comprises a 5GSM message encapsulated in the UL NAS TRANSPORT message with request type set to "modification request".

In an embodiment of the disclosure, the method comprises: determining not to forward the message if the condition is satisfied (e.g. if the NSSAA procedure for the network slice is pending, is ongoing, is unsuccessful, and/or has not successfully completed).

In an embodiment of the disclosure, the method comprises: determining not to forward the message if the NSSAA procedure for the network slice is pending, unless a type of the request is one of one or more predefined types.

In an embodiment of the disclosure, the one or more predefined types of request include a request to release a PDU session.

In an embodiment of the disclosure, the method comprises: determining not to forward the message if the condition is satisfied, unless the request does not specify a request type and/or a request type is missing from the request.

In an embodiment of the disclosure, the method comprises: determining not to forward the message if the condition is satisfied, the request specifies a request type, and the request type is a request to modify a PDU session.

In an embodiment of the disclosure, the method further comprises: if it is determined not to forward the message, transmitting, to the UE, a second message indicating that the message was not forwarded to the second network entity.

In an embodiment of the disclosure, the second message transmitted to the UE includes the message with 5GMM cause set to "payload was not forwarded" or "5GSM message not forwarded due to pending NSSAA".

According to various embodiments of the disclosure, a method, for a network entity (e.g. AMF entity), for performing a Network Slice-Specific Authentication and Authorization (NSSAA) procedure in a network comprising a UE, the first network entity and a second network entity (e.g. a SMF entity) is provided. The method comprising: receiving a first registration request message from the UE over a first access type (e.g. 3GPP access), the first registration request message including an identification of one or more first requested network slices; receiving a second registration request message from the UE over a second access type (e.g. non-3GPP access), the second registration request message including an identification of one or more second requested network slices; determining to perform the NSSAA procedure for each network slice that is subject to NSSAA identified in the first and second registration request messages; and transmitting, to the UE, a registration accept message including an identification of network slices for which the NSSAA procedure is pending (e.g. will be performed or is ongoing).

In an embodiment of the disclosure, the registration accept message includes an identification of all network slices for which the NSSAA procedure is pending from the requested network slices of both the first and second registration request messages that were sent over all (or both) access technology types (e.g. 3GPP and non-3GPP accesses).

In an embodiment of the disclosure, the NSSAA procedure is performed once for a network slice that is subject to NSSAA and that is identified in both the first and second registration request messages.

In an embodiment of the disclosure, the performing the NSSAA procedure comprises: in response to receiving the first registration request message, performing the NSSAA procedure for each network slice that is subject to NSSAA identified in the first registration request message; and in response to receiving the second registration request message, performing the NSSAA procedure for each network slice that is subject to NSSAA identified in the second registration request message.

In an embodiment of the disclosure, the second registration request message is received while performing the NSSAA procedure, or while NSSAA is to be initiated, for each network slice that is subject to NSSAA identified in the first registration request message.

In an embodiment of the disclosure, the transmitting the registration accept message comprises: transmitting a registration accept message including an identification of one or more third network slices from the requested network slices of the second registration request message that are in addition to one or more fourth network slices from the requested network slices of the first registration request message, wherein the third and fourth network slices are network slices for which the NSSAA procedure is pending, is ongoing, and/or has not successfully completed.

According to various embodiments of the disclosure, a method for network slice authorization by a network management entity in a wireless communications system is provided. The method comprises: receiving, from a user equipment, a registration request message including an indication of one or more requested network slices associated with a subscription of the user equipment; transmitting, to the user equipment, a registration accept message including at least one of an indication of an allowable network slice from among the requested network slices and an indication of a network slice upon which authorization is to be performed; and performing authorization on network slices of the requested network slices upon which authorization is to be performed and one or more default network slices associated with the subscription of the user equipment, wherein all of the default network slices associated with the subscription of the user equipment require authorization.

In an embodiment of the disclosure, the indication of the network slice upon which authorization is to be performed is included in a pending authorization information element of the registration accept message.

In an embodiment of the disclosure, the pending authorization information element indicates up to 16 network slices.

In an embodiment of the disclosure, the indication of a network slice upon which authorization is to be performed includes an indication of the requested network slices upon which authorization is to be performed and the one or more default network slices associated with the subscription of the user equipment.

In an embodiment of the disclosure, the method further comprises transmitting, in response to completion of the authorization, a configuration update command message including information on a result of the authorization to the user equipment.

In an embodiment of the disclosure, the information on a result of the authorization includes an indication of whether authorization has been successfully completed on at least one of the default network slices associated with the subscription of the user equipment.

In an embodiment of the disclosure, the information on a result of the authorization includes an indication of up to 16 network slices for which authorization has been successfully completed.

In an embodiment of the disclosure, the information on a result of the authorization includes an indication of network slices for which authorization failed.

In an embodiment of the disclosure, in response to completion of the authorization, if the requested network slices are not available or have not been successfully authorized, and at least one default network slice associated with the subscription of the user equipment has been successfully authorized, transmitting a configuration update command message including information indicating the at least one default network slice associated with the subscription of the user equipment that has been successfully authorized.

In an embodiment of the disclosure, if a requested network slice can be used by the user equipment, and none of the default network slices associated with the subscription of the user equipment have been successfully authorized (or if the authorization has been revoked due to subscription changes or network local policies), transmitting a configuration update command message (or Registration Accept message) including information indicating that no default network slices associated with the subscription of the user equipment have been successfully authorized

In an embodiment of the disclosure, the method further comprises transmitting, in response to at least one default slice becoming usable by the user equipment, transmitting a configuration update command message including information indicating that at least one default network slice associated with the subscription of the user equipment can be used by the user equipment.

In an embodiment of the disclosure, an indication of the one or more default network slices associated with the subscription of the user equipment is not included in the registration request message.

According to various embodiments of the disclosure, a method for network registration by a user equipment in a wireless communications system is provided. The method comprises: transmitting, to a network management entity, a registration request message including an indication of one or more requested network slices associated with a subscription of the user equipment; receiving, from the network management entity, a registration accept message including at least one of an indication of an allowable network slice from among the requested network slices and an indication of a network slice upon which authorization is to be performed; receiving, from the network management entity, a configuration update command message (or Registration Accept message) including information on a result of network slice authorization, wherein the information on a result of the authorization includes an indication of whether authorization has been successfully completed on at least one of the default network slices associated with the subscription of the user equipment; and if the information on a result of the authorization indicates that authorization has not been successfully completed on at least one default slice, blocking transmission of session management request messages that do not include or are not associated with an indication of a requested network slice, wherein all of the default network slices associated with the subscription of the user equipment require authorization.

According to various embodiments of the disclosure, a method for network slice authorization by a network management entity in a wireless communications system is provided, the method comprising: receiving, from a user equipment, a message including a Protocol Data Unit (PDU) request; if the message does not include an indication of a network slice, and a default network slice associated with the user equipment is not available, transmitting a message indicating rejection of the PDU request or indicating not forwarding of the PDU request, to the user equipment; performing authorization on one or more default network slices associated with the user equipment; transmitting, to the user equipment, a configuration update command message including information indicating the one or more default network slices that authorization is being performed on; and in response to completion of the authorization, transmitting a configuration update command message including information on a result of the authorization to the user equipment.

In an embodiment of the disclosure, all of the default network slices associated with the user equipment require authorization.

In an embodiment of the disclosure, the information on a result of the authorization includes an indication of whether authorization has been successfully completed on at least one of the default network slices associated with the user equipment.

In an embodiment of the disclosure, the information on a result of the authorization includes an indication of the default network slices for which authorization has been successfully completed.

In an embodiment of the disclosure, the information on a result of the authorization includes an indication of default network slices for which authorization failed.

In an embodiment of the disclosure, the message indicating rejection of the PDU request or indicating not forwarding of the PDU request indicates that the transmission of messages including a PDU request without an indication of a network slice or that are not associated with an indication of a network slice is not permitted.

In an embodiment of the disclosure, the indication that the transmission of messages including a PDU request without an indication of a network slice or that are not associated with an indication of a network slice is not permitted is a 5G Mobility Management (5GMM) cause code.

In an embodiment of the disclosure, the message indicating rejection of the PDU request or indicating not forwarding of the PDU request includes an information on a back-off timer associated with retransmission of the message including a PDU request.

In an embodiment of the disclosure, wherein the message indicating rejection of the PDU request or indicating not forwarding of the PDU request includes information indicating whether transmission of the message including a PDU request is permitted in an equivalent Public Land Mobile Network (PLMN).

*378According to various embodiments of the disclosure, a method for network registration by a user equipment in a wireless communications system is provided. The method comprises: transmitting, to a network management entity, a message including a Protocol Data Unit (PDU) request without an indication of a network slice; receiving a message indicating rejection of the PDU request or indicating not forwarding of the PDU request, from the network management entity; blocking transmission of session management request messages that do not include or that are not associated with an indication of a requested network slice; receiving, from the network management entity, a configuration update command message including information indicating one or more default network slices that authorization is being performed on; receiving, from the network management entity, a configuration update command message including information on a result of the authorization; and updating the blocking of transmissions of session management request messages that do not include or that are not associated with an indication of a requested network slice based on the information on the result of the authorization.

According to various embodiments of the disclosure, a method for network slice authorization by a network management entity in a wireless communications system is provided. The method comprises: receiving, from a user equipment, a registration request message including an indication of one or more requested network slices associated with a subscription of the user equipment; performing authorization on network slices of the requested network slices that require authorization and all default network slices associated with the subscription of the user equipment, wherein all of the default network slices associated with the subscription of the user equipment require authorization.

In an embodiment of the disclosure, the method further comprises transmitting, in response to completion of the authorization, a configuration update command message including an indication of whether authorization has been successfully completed on at least one of the default network slices associated with the subscription of the user equipment.

In an embodiment of the disclosure, an indication of the one or more default network slices associated with the subscription of the user equipment is not included in the registration request message.

According to various embodiments of the disclosure, a method for network slice authorization by a network management entity in a wireless communications system is provided. The method comprises: receiving, from a user equipment, a registration request message including an indication of one or more requested network slices; transmitting, to the user equipment, a registration accept message indicating the network slices from among the one or more requested network slices upon which authorization is to be performed, and performing authorization on network slices of the requested network slices upon which authorization is to be performed, wherein the registration accept message indicates up to 16 network slices upon which authorization is to be performed.

According to various embodiments of the disclosure, a method for network registration by a user equipment in a wireless communications system is provided. The method comprising: transmitting, to a network management entity, a registration request message including an indication of one or more requested network slices; receiving, from the network management entity, a registration accept message including an indication of a network slice upon which authorization is to be performed; receiving, from the network management entity, a configuration update command message including information on a result of network slice authorization, wherein the information on a result of the authorization includes an indication of whether authorization has been successfully completed on the network slice upon which authorization is to be performed, wherein the registration accept message indicates up to 16 network slices upon which authorization is to be performed.

According to various embodiments of the disclosure, a network entity (e.g. an AMF entity, a user equipment, or a network management entity) configured to operate according to a method of any of the above examples is provided.

According to various embodiments of the disclosure, a network entity (e.g. an AMF entity, a user equipment, or a network management entity) configured to cooperate with a network entity according to the above example is provided.

According to various embodiments of the disclosure, a network (or wireless communication system) comprising one or more network entities according to the any of the above examples is provided.

According to various embodiments of the disclosure, a computer program comprising instructions which, when the program is executed by a computer or processor, cause the computer or processor to carry out a method according to the preceding example is provided.

According to various embodiments of the disclosure, a computer or processor-readable data carrier having stored thereon a computer program according to the above examples is provided.

## Claims

1. A method performed by an access and mobility management function, AMF, entity (1200) for use in a wireless communication system, the method comprising:
receiving, from a user equipment, UE, an uplink non-access stratum, NAS, transport message including modification request information and a 5G system session management, 5GSM, message,
wherein the uplink NAS transport message is associated with a modification of a PDU session for a single-network slice selection assistance information, S-NSSAI;
in case that the AMF is performing a network slice-specific authentication and authorization, NSSAA, procedure for the S-NSSAI, identifying not to forward the 5GSM message to a session management function, SMF, entity; and
transmitting, to the UE, a downlink NAS transport message including the 5GSM message and 5G Mobility Management, 5GMM, cause #90 indicating that a payload was not forwarded, the 5GSM message being not forwarded to the SMF entity because of the ongoing NSSAA procedure for the S-NSSAI.

2. The method of claim 1, wherein the uplink NAS transport message includes a request type set to modification request.

3. The method of claim 1, further comprising:
transmitting, to the UE, a registration accept message including a pending network slice selection assistance information, NSSAI.

4. The method of claim 3, further comprising:
receiving, from the UE, a registration request message including a requested NSSAI over a 3GPP access, non-3GPP access, or both the 3GPP access or non-3GPP access ; and
wherein the pending NSSAI included in the registration accept message contains at least one S-NSSAI for which the NSSAA is ongoing, based on the requested NSSAI.

5. The method of claim 3,
wherein the registration accept message further includes an indicator related to the NSSAA in the 5GS registration result IE, and
wherein the UE does not initiate services except for emergency services or for a high priority access until the UE receives an allowed NSSAI.

6. A method performed by a user equipment, UE, (1200) for use in a wireless communication system, the method comprising:
transmitting, to an access and mobility management function, AMF, entity, an uplink non-access stratum, NAS, transport message including modification request information and a 5G system session management, 5GSM, message,
wherein the uplink NAS transport message is associated with a modification of a PDU session for a single-network slice selection assistance information, S-NSSAI; and
receiving, from the AMF entity, a downlink NAS transport message including the 5GSM message and 5G Mobility Management, 5GMM, cause #90 indicating that a payload was not forwarded,
wherein the 5GSM message is not to forward to a session management function, SMF, entity in case that the AMF entity is performing a network slice-specific authentication and authorization, NSSAA, procedure for the S-NSSAI, the 5GSM message being not forwarded to the SMF entity because of the ongoing NSSAA procedure for the S-NSSAI.

7. The method of claim 6, wherein the uplink NAS transport message includes a request type set to modification request.

8. The method of claim 6, further comprising:
receiving, from the AMF entity, a registration accept message including a pending network slice selection assistance information, NSSAI.

9. The method of claim 8, further comprising:
transmitting, to the AMF entity, a registration request message including a requested NSSAI over a 3GPP access, non-3GPP access, or both the 3GPP access or non-3GPP access; and
wherein the pending NSSAI included in the registration accept message contains at least one S-NSSAI for which the NSSAA is ongoing, based on the requested NSSAI.

10. The method of claim 8,
wherein the registration accept message further includes an indicator related to the NSSAA in the 5GS registration result IE, and
wherein the UE does not initiate services except for emergency services or for a high priority access until the UE receives an allowed NSSAI.

11. An access and mobility management function, AMF, entity (1200) for use in a wireless communication system, the AMF entity comprising:
a transceiver (1203, 1205); and
at least one processor (1201) communicatively coupled with the transceiver (1203, 1205)
memory communicatively coupled to the at least one processor, storing instructions executable by the at least one processor (1201) to cause the AMF entity (1200) to:
control the transceiver to receive, from a user equipment, UE, an uplink non-access stratum, NAS, transport message including modification request information and a 5G system session management, 5GSM, message,
wherein the uplink NAS transport message is associated with a modification of a PDU session for a single-network slice selection assistance information, S-NSSAI;
in case that the AMF is performing a network slice-specific authentication and authorization, NSSAA, procedure for the S-NSSAI, identify not to forward the 5GSM message to a session management function, SMF, entity; and
control the transceiver to transmit, to the UE, a downlink NAS transport message including the 5GSM message and 5G Mobility Management, 5GMM, cause #90 indicating that a payload was not forwarded, the 5GSM message being not forwarded to the SMF entity because of the ongoing NSSAA procedure for the S-NSSAI.

## Patentansprüche

1. Verfahren, das von einer Zugangs- und Mobilitätsverwaltungsfunktions-, AMF, -Entität (1200) zur Verwendung in einem Drahtloskommunikationssystem durchgeführt wird, wobei das Verfahren Folgendes umfasst:
Empfangen, von einem Benutzergerät, UE, einer Uplink-Non-Access-Stratum-, NAS, - Transportnachricht, die Modifikationsanforderungsinformationen und eine 5G-System-Sitzungsverwaltungs-, 5GSM, -Nachricht enthält,
wobei die Uplink-NAS-Transportnachricht mit einer Modifikation einer PDU-Sitzung für Einzelnetzscheibenauswahlunterstützungsinformationen, S-NSSAI, verknüpft ist;
falls die AMF eine netzscheibenspezifische Authentifizierungs- und Autorisierungs-, NSSAA, -Prozedur für die S-NSSAI durchführt, Identifizieren, die 5GSM-Nachricht nicht an eine Sitzungsverwaltungsfunktions-, SMF, -Entität weiterzuleiten; und
Übertragen, an das UE, einer Downlink-NAS-Transportnachricht, die die 5GSM-Nachricht und eine 5G-Mobilitätsverwaltungs-, 5GMM, -Ursache #90 enthält, die angibt, dass eine Nutzlast nicht weitergeleitet wurde, wobei die 5GSM-Nachricht aufgrund der laufenden NSSAA-Prozedur für die S-NSSAI nicht an die SMF-Entität weitergeleitet wird.

2. Verfahren nach Anspruch 1, wobei die Uplink-NAS-Transportnachricht einen auf Modifikationsanforderung eingestellten Anforderungstyp enthält.

3. Verfahren nach Anspruch 1, ferner umfassend:
Übertragen, an das UE, einer Registrierungsannahmenachricht, die ausstehende Netzscheibenauswahlunterstützungsinformationen, NSSAI, enthält.

4. Verfahren nach Anspruch 3, ferner umfassend:
Empfangen, von dem UE, einer Registrierungsanforderungsnachricht, die eine angeforderte NSSAI enthält, über einen 3GPP-Zugang, einen Nicht-3GPP-Zugang oder sowohl den 3GPP-Zugang als auch den Nicht-3GPP-Zugang; und
wobei die in der Registrierungsannahmenachricht enthaltene ausstehende NSSAI basierend auf der angeforderten NSSAI mindestens eine S-NSSAI enthält, für die die NSSAA laufend ist.

5. Verfahren nach Anspruch 3,
wobei die Registrierungsannahmenachricht ferner einen Indikator in Bezug auf die NSSAA im 5GS-Registrierungsergebnis-IE enthält, und
wobei das UE keine Dienste außer für Notfalldienste oder für einen Zugang mit hoher Priorität initiiert, bis das UE eine erlaubte NSSAI empfängt.

6. Verfahren, das von einem Benutzergerät, UE, (1200) zur Verwendung in einem Drahtloskommunikationssystem durchgeführt wird, wobei das Verfahren Folgendes umfasst:
Übertragen, an eine Zugangs- und Mobilitätsverwaltungsfunktions-, AMF, -Entität, einer Uplink-Non-Access-Stratum-, NAS, -Transportnachricht, die Modifikationsanforderungsinformationen und eine 5G-System-Sitzungsverwaltungs-, 5GSM, - Nachricht enthält,
wobei die Uplink-NAS-Transportnachricht mit einer Modifikation einer PDU-Sitzung für Einzelnetzscheibenauswahlunterstützungsinformationen, S-NSSAI, verknüpft ist; und
Empfangen, von der AMF-Entität, einer Downlink-NAS-Transportnachricht, die die 5GSM-Nachricht und eine 5G-Mobilitätsverwaltungs-, 5GMM, -Ursache #90 enthält, die angibt, dass eine Nutzlast nicht weitergeleitet wurde,
wobei die 5GSM-Nachricht an eine Sitzungsverwaltungsfunktions-, SMF, -Entität nicht weiterzuleiten ist, falls die AMF-Entität eine netzscheibenspezifische Authentifizierungs- und Autorisierungs-, NSSAA, -Prozedur für die S-NSSAI durchführt, wobei die 5GSM-Nachricht aufgrund der laufenden NSSAA-Prozedur für die S-NSSAI nicht an die SMF-Entität weitergeleitet wird.

7. Verfahren nach Anspruch 6, wobei die Uplink-NAS-Transportnachricht einen auf Modifikationsanforderung eingestellten Anforderungstyp enthält.

8. Verfahren nach Anspruch 6, ferner umfassend:
Empfangen, von der AMF-Entität, einer Registrierungsannahmenachricht, die ausstehende Netzscheibenauswahlunterstützungsinformationen, NSSAI, enthält.

9. Verfahren nach Anspruch 8, ferner umfassend:
Übertragen, an die AMF-Entität, einer Registrierungsanforderungsnachricht, die eine angeforderte NSSAI enthält, über einen 3GPP-Zugang, einen Nicht-3GPP-Zugang oder sowohl den 3GPP-Zugang als auch den Nicht-3GPP-Zugang; und
wobei die in der Registrierungsannahmenachricht enthaltene ausstehende NSSAI basierend auf der angeforderten NSSAI mindestens eine S-NSSAI enthält, für die die NSSAA laufend ist.

10. Verfahren nach Anspruch 8,
wobei die Registrierungsannahmenachricht ferner einen Indikator in Bezug auf die NSSAA im 5GS-Registrierungsergebnis-IE enthält, und
wobei das UE keine Dienste außer für Notfalldienste oder für einen Zugang mit hoher Priorität initiiert, bis das UE eine erlaubte NSSAI empfängt.

11. Zugangs- und Mobilitätsverwaltungsfunktions-, AMF, -Entität (1200) zur Verwendung in einem Drahtloskommunikationssystem, wobei die AMF-Entität Folgendes umfasst:
einen Sendeempfänger (1203, 1205); und
mindestens einen Prozessor (1201), der mit dem Sendeempfänger (1203, 1205) kommunikativ gekoppelt ist;
und einen Speicher, der mit dem mindestens einen Prozessor kommunikativ gekoppelt ist und Anweisungen speichert, die durch den mindestens einen Prozessor (1201) ausführbar sind, um die AMF-Entität (1200) zu veranlassen zum:
Steuern des Sendeempfängers, um von einem Benutzergerät, UE, eine Uplink-Non-Access-Stratum-, NAS, -Transportnachricht zu empfangen, die Modifikationsanforderungsinformationen und eine 5G-System-Sitzungsverwaltungs-, 5GSM, - Nachricht enthält,
wobei die Uplink-NAS-Transportnachricht mit einer Modifikation einer PDU-Sitzung für Einzelnetzscheibenauswahlunterstützungsinformationen, S-NSSAI, verknüpft ist;
falls die AMF eine netzscheibenspezifische Authentifizierungs- und Autorisierungs-, NSSAA, -Prozedur für die S-NSSAI durchführt, Identifizieren, die 5GSM-Nachricht nicht an eine Sitzungsverwaltungsfunktions-, SMF, -Entität weiterzuleiten; und
Steuern des Sendeempfängers, um an das UE eine Downlink-NAS-Transportnachricht zu übertragen, die die 5GSM-Nachricht und eine 5G-Mobilitätsverwaltungs-, 5GMM, -Ursache #90 enthält, die angibt, dass eine Nutzlast nicht weitergeleitet wurde, wobei die 5GSM-Nachricht aufgrund der laufenden NSSAA-Prozedur für die S-NSSAI nicht an die SMF-Entität weitergeleitet wird.

## Revendications

1. Procédé exécuté par une entité de fonction de gestion d'accès et de mobilité, AMF, (1200), utilisé dans un système de communication sans fil, le procédé comprenant :
recevoir, depuis un équipement utilisateur, UE, un message de transport de couche non accès, NAS, en liaison montante incluant des informations de demande de modification et un message de gestion de session de système 5G, 5GSM,
dans lequel le message de transport NAS en liaison montante est associé à une modification d'une session PDU pour une information d'assistance à sélection d'une tranche de réseau unique, S-NSSAI ;
dans le cas où l'AMF effectue une procédure d'authentification et d'autorisation spécifiques à une tranche dans un réseau, NSSAA, pour la S-NSSAI, identifier de ne pas transmettre le message 5GSM à une entité de fonction de gestion de session, SMF ; et
transmettre, à l'UE, un message de transport NAS en liaison descendante incluant le message 5GSM et une cause #90 de gestion de mobilité 5G, 5GMM, indiquant qu'une charge utile n'a pas été transmise, le message 5GSM n'étant pas transmis à l'entité SMF en raison de la procédure NSSAA en cours pour la S-NSSAI.

2. Procédé selon la revendication 1, dans lequel le message de transport NAS en liaison montante inclut un type de demande défini comme demande de modification.

3. Procédé selon la revendication 1, comprenant en outre :
transmettre, à l'UE, un message d'acceptation d'enregistrement incluant une information d'assistance à sélection de tranche de réseau en attente, NSSAI.

4. Procédé selon la revendication 3, comprenant en outre :
recevoir, depuis l'UE, un message de demande d'enregistrement incluant une NSSAI demandée sur un accès 3GPP, un accès non-3GPP, ou tous deux accès 3GPP et non-3GPP ; et
dans lequel la NSSAI en attente inclus dans le message d'acceptation d'enregistrement contient au moins une S-NSSAI pour laquelle la NSSAA est en cours, sur la base de la NSSAI demandée.

5. Procédé selon la revendication 3,
dans lequel le message d'acceptation d'enregistrement inclut en outre un indicateur lié à la NSSAA dans le résultat d'enregistrement IE 5GS, et
dans lequel l'UE n'initie pas de services sauf pour des services d'urgence ou pour un accès à haute priorité jusqu'à ce que l'UE reçoive une NSSAI autorisée.

6. Procédé exécuté par un équipement utilisateur, UE, (1200), utilisé dans un système de communication sans fil, le procédé comprenant :
transmettre, à une entité de fonction de gestion d'accès et de mobilité, AMF, un message de transport de couche non accès, NAS, en liaison montante incluant des informations de demande de modification et un message de gestion de session de système 5G, 5GSM,
dans lequel le message de transport NAS en liaison montante est associé à une modification d'une session PDU pour une information d'assistance à sélection d'une tranche de réseau unique, S-NSSAI ; et
recevoir, depuis l'entité AMF, un message de transport NAS en liaison descendante incluant le message 5GSM et une cause #90 de gestion de mobilité 5G, 5GMM, indiquant qu'une charge utile n'a pas été transmise,
dans lequel le message 5GSM n'est pas transmis à une entité de fonction de gestion de session, SMF, dans le cas où l'entité AMF effectue une procédure d'authentification et d'autorisation spécifiques à une tranche dans un réseau, NSSAA, pour la S-NSSAI, le message 5GSM n'étant pas transmis à l'entité SMF en raison de la procédure NSSAA en cours pour la S-NSSAI.

7. Procédé selon la revendication 6, dans lequel le message de transport NAS en liaison montante inclut un type de demande défini comme demande de modification.

8. Procédé selon la revendication 6, comprenant en outre :
recevoir, depuis l'entité AMF, un message d'acceptation d'enregistrement incluant une information d'assistance à sélection de tranche de réseau en attente, NSSAI.

9. Procédé selon la revendication 8, comprenant en outre :
transmettre, l'entité AMF, un message de demande d'enregistrement incluant une NSSAI demandée sur un accès 3GPP, un accès non-3GPP, ou tous deux accès 3GPP et non-3GPP ; et
dans lequel la NSSAI en attente inclus dans le message d'acceptation d'enregistrement contient au moins une S-NSSAI pour laquelle la NSSAA est en cours, sur la base de la NSSAI demandée.

10. Procédé selon la revendication 8,
dans lequel le message d'acceptation d'enregistrement inclut en outre un indicateur lié à la NSSAA dans le résultat d'enregistrement IE 5GS, et
dans lequel l'UE n'initie pas de services sauf pour des services d'urgence ou pour un accès à haute priorité jusqu'à ce que l'UE reçoive une NSSAI autorisée.

11. Entité de fonction de gestion d'accès et de mobilité, AMF, (1200), utilisée dans un système de communication sans fil, l'entité AMF comprenant :
un émetteur-récepteur (1203, 1205) ; et
au moins un processeur (1201) couplé de manière communicative à l'émetteur-récepteur (1203, 1205),
une mémoire couplée de manière communicative audit au moins un processeur, et stockant des instructions exécutables par ledit au moins un processeur (1201) pour amener l'entité AMF (1200) à :
commander l'émetteur-récepteur à recevoir, depuis un équipement utilisateur, UE, un message de transport de couche non accès, NAS, en liaison montante incluant des informations de demande de modification et un message de gestion de session de système 5G, 5GSM,
dans lequel le message de transport NAS en liaison montante est associé à une modification d'une session PDU pour une information d'assistance à sélection d'une tranche de réseau unique, S-NSSAI ;
dans le cas où l'AMF effectue une procédure d'authentification et d'autorisation spécifiques à une tranche dans un réseau, NSSAA, pour la S-NSSAI, identifier de ne pas transmettre le message 5GSM à une entité de fonction de gestion de session, SMF ; et
commander l'émetteur-récepteur à transmettre, à l'UE, un message de transport NAS en liaison descendante incluant le message 5GSM et une cause #90 de gestion de mobilité 5G, 5GMM, indiquant qu'une charge utile n'a pas été transmise, le message 5GSM n'étant pas transmis à l'entité SMF en raison de la procédure NSSAA en cours pour la S-NSSAI.
